# EUROPEAN PATENT SPECIFICATION

(11) **EP 4 303 636 B1**
(45) Date of publication and mention of the grant of the patent: **06.05.2026**
(21) Application number: 21956454.9
(22) Date of filing: 13.09.2021
(51) Int. Cl.: G02B 13/18, G02B 13/00, G06F 18/00, G02B 9/12

(54) **LENS SYSTEM, OPTICAL FINGERPRINT RECOGNITION APPARATUS, AND TERMINAL DEVICE**
LINSENSYSTEM, OPTISCHE FINGERABDRUCKERKENNUNGSVORRICHTUNG UND ENDGERÄTEVORRICHTUNG
SYSTÈME DE LENTILLES, APPAREIL DE RECONNAISSANCE D'EMPREINTE DIGITALE OPTIQUE, ET DISPOSITIF TERMINAL

(43) Date of publication of application: 10.01.2024
(73) Proprietor: HUI DING INTERNATIONAL PTE. LTD., The Aries 117586 (SG)
(72) Inventor: TSAI, Fei Hsin, Singapore 117586 (SG); XU, Baiwei, Singapore 117586 (SG); GE, Cong, Singapore 117586 (SG)
(74) Representative: Kraus & Lederer PartGmbB
(86) International application number: PCT/CN2021/118070
(87) International publication number: WO 2023/035277

(56) References cited:
- WO-A1-2021/128564
- CN-A- 110 073 265
- CN-A- 111 077 661
- CN-A- 111 694 134
- CN-A- 112 782 835
- CN-U- 208 888 461
- CN-U- 208 888 461
- CN-U- 210 572 976
- CN-U- 210 954 460
- JP-A- 2006 162 829
- US-A1- 2016 205 297

## Description

### TECHNICAL FIELD

Embodiments of the present disclosure relate to the field of optical imaging, and more particularly relate to a lens system, an optical fingerprint recognition apparatus, and a terminal device.

### BACKGROUND

In order to improve user experience, a high screen ratio has become a goal pursued by manufacturers of mobile phones or other terminal devices at present. Since fingerprint information is collected using an under-display optical fingerprint recognition technology based on an optical imaging principle, fingerprint recognition can be realized simply by arranging a fingerprint recognition module under a display screen of a terminal device without occupying a display region of the display screen, so that the under-display optical fingerprint recognition technology has become a mainstream technology.

However, with the increasing diversification and specialization of mobile phone functions, various functional modules of a mobile phone have an increasing demand for an internal space of the mobile phone, and an existing optical fingerprint recognition module has a large size in a direction perpendicular to the display screen, thereby restricting the development of thin and light mobile phones.

WO2021/128564A1 is directed to an optical lens, which sequentially comprises, along an optical axis from an object side to an image side: flat glass; a first lens having negative focal power; a stop ; a second lens having positive focal power; a third lens having positive focal power; and an infrared filter. The first lens has a convex object-side surface proximate to the optical axis, at least one inflection point, and a concave image-side surface; the second lens has a convex object-side surface, and a convex image-side surface; and the third lens has a convex image-side surface. The optical lens can improve fingerprint recognition rate of the user and reduce production costs, and are suitable for the design requirements of a mobile phone full screen.

CN208888461U is directed to lens system. The system comprises a first lens and a second lens which are sequentially arranged from an object space to an image space, wherein the first lens is a meniscus lens with negative focal power, the object side of the meniscus lens is a concave surface, the second lens is a lens with positive focal power, the object side and the image plane side of the second lens are both convex surfaces, and the third lens is a lens with positive focal power, and the object side and the image plane side of the third lens are both convex surfaces; Moreover, the parameters of the lens system satisfy a first relationship such that a field angle FOV of the lens system is greater than a first threshold value.

US20160205297A1 is a compact optical system includes, in order from an object side to an image side, a first lens element, a second lens element and a third lens element. The first lens element with negative refractive power has an image-side surface being concave in a paraxial region thereof. The second lens element has refractive power, wherein at least one of two surfaces of the second lens element is aspheric, and the second lens element is made of plastic material. The third lens element has positive refractive power, wherein at least one of two surfaces of the third lens element is aspheric, and the third lens element is made of plastic material. The compact optical system further comprises a stop located between the first lens element and the second lens element. The first, second, and third lens elements are all stationary relative to one another in a paraxial region.

CN111694134A is directed to an image capturing lens comprising, in order from an object side to an image side: a first lens element with negative refractive power; a second lens element with positive refractive power; a third lens element with positive refractive power; the image capturing lens satisfies the following relational expressions: SD11/sin (ANG12) is greater than 2.50 mm and less than 5.20mm, wherein SD11 is the height of the maximum effective diameter of the object side surface of the first lens relative to the optical axis, and ANG12 is the included angle between the tangent line of the curved surface of the image side surface of the first lens at the maximum effective diameter and the vertical line of the optical axis.

CN112782835A is directed to an optical imaging lens. The optical imaging lens includes, in order along an optical axis from an object side to an image side : a first lens having negative power, an object side being a concave surface and an image side being a concave surface; A second lens with positive focal power having a convex object side and a convex image side; And a third lens having a positive power, the object side of which is a convex surface. The total effective focal length f of the optical imaging lens and the entrance pupil diameter EPD of the optical imaging lens satisfy: f/EPD is less than 1.5; and the maximum field angle FOV of the optical imaging lens satisfies that FOV is 140 DEG and less than 160 DEG.

### SUMMARY

The present disclosure provides a lens system, an optical fingerprint recognition apparatus, and a terminal device, where a longitudinal size of the optical fingerprint recognition apparatus using the lens system can be effectively reduced, so that the lens system or the optical fingerprint recognition apparatus can be better applied to a terminal device having size requirements, thereby enhancing applicability of the lens system, and additionally reserving more installation space for other devices in the terminal device.

The invention is defined in the appended set of claims. According to the invention, a lens system is provided, including: a first lens, a second lens, and a third lens sequentially arranged from an object side to an image side; where the first lens is a biconcave lens having a negative refractive power; the second lens is a biconvex lens having a positive refractive power; and the third lens is a lens having a positive refractive power, where an object side surface of the third lens is a convex surface, and parameters of the lens system satisfy a first relationship: -0.7<f1*f3/TTL<-0.15.

In some possible implementations, the parameters of the lens system satisfy at least one relationship among second relationships, and the second relationships include: -1.6<f1/f2<-0.6, 0.2<f2/f3<1.2, -1.7<f1/f12<-0.4, 0.5<f2/f12<1.2, 1.2<f2/f23<1.9, 1.5<f3/f23<3.7, 1.2<f12/f23<2.7, 1.5<f12/f<3.8, and 1<f23/f<1.6, where f is a focal length of the lens system, f1 is a focal length of the first lens, f2 is a focal length of the second lens, f3 is a focal length of the third lens, f12 is a combined focal length of the first lens and the second lens, and f23 is a combined focal length of the second lens and the third lens.

In some possible implementations, the parameters of the lens system satisfy at least one relationship among third relationships, and the third relationships include: -1.2<r1/r2<-0.2, - 2.7<r3/r4<-1.9, and -0.2<r5/r6<0.5, where r1 is a curvature radius of an object side surface of the first lens, r2 is a curvature radius of an image side surface of the first lens, r3 is a curvature radius of an object side surface of the second lens, r4 is a curvature radius of an image side surface of the second lens, r5 is a curvature radius of the object side surface of the third lens, and r6 is a curvature radius of an image side surface of the third lens.

According to the invention, the parameters of the lens system satisfies the fourth relationships, and the fourth relationships include: 0.4<CT1/CT2<0.6 and 1.7<CT2/CT3<2.0, where CT1 is a thickness of the first lens along its optical axis direction, CT2 is a thickness of the second lens along its optical axis direction, and CT3 is a thickness of the third lens along its optical axis direction.

In some possible implementations, the first lens in the lens system satisfies: 0.7<f1/r1<1.4 and -1.1<f1/r2<-0.3, where f1 is the focal length of the first lens, r1 is the curvature radius of the object side surface of the first lens, and r2 is the curvature radius of the image side surface of the first lens.

In some possible implementations, the second lens in the lens system satisfies 0.4<f2/r3<0.8 and -1.6<f2/r4<-1.2, where f2 is the focal length of the second lens, r3 is the curvature radius of the object side surface of the second lens, and r4 is the curvature radius of the image side surface of the second lens.

In some possible implementations, the third lens in the lens system satisfies: 1.4<f3/r5<3.0 and -0.3<f3/r6<1.3, where f3 is the focal length of the third lens, r5 is the curvature radius of the object side surface of the third lens, and r6 is the curvature radius of the image side surface of the third lens.

According to the invention, the lens system further includes: a stop arranged between the first lens and the second lens.

In some possible implementations, the lens system has a FOV of greater than 100 degrees.

In some possible implementations, the lens system has an F-number of less than 2.0, and has a distortion of less than 5%.

In some possible implementations, at least one surface of the lens system is an aspheric surface.

In some possible implementations, two surfaces of each lens in the lens system are each an aspheric surface.

In some possible implementations, the image side surface of the third lens is a convex surface or a concave surface.

In a second aspect, an optical fingerprint recognition apparatus is provided, including:
the lens system in the first aspect or any one possible implementation of the first aspect.

In a possible implementation, the optical fingerprint recognition apparatus further includes: a bracket, where the lens system is interference-fitted in the bracket; an image sensor arranged under the lens system for receiving a fingerprint light signal converged by the lens system, and processing the fingerprint light signal to acquire fingerprint information included in the fingerprint light signal; and an infrared filter arranged as a filter film layer formed on a surface of the image sensor.

In a third aspect, a terminal device is provided, including:
a display screen and the optical fingerprint recognition apparatus in the second aspect or in any one possible implementation of the second aspect, where the optical fingerprint recognition apparatus is arranged under the display screen.

In a possible implementation, the terminal device further includes: a foam and a copper foil arranged under the display screen, where the foam and the copper foil each have an opening, and the opening of the foam and the opening of the copper foil correspond to top of the lens system of the optical fingerprint recognition apparatus, such that a fingerprint light signal including fingerprint information enters the lens system.

A lens system recited in claims 1-9 is provided, an optical fingerprint recognition apparatus as recited in claims 10-11, a terminal device as recited in claims 12-13 is provided.

### BRIEF DESCRIPTION OF DRAWINGS

Fig. 1 is a schematic structural diagram of a terminal device adapted to implement embodiments of the present disclosure.
Fig. 2 is a schematic structural diagram of a lens system according to an embodiment of the present disclosure.
Fig. 3 is a schematic structural diagram of an optical fingerprint recognition apparatus according to an embodiment of the present disclosure.
Fig. 4 is a schematic diagram of a layout of a lens system according to an embodiment of the present disclosure.
Fig. 5 is a field curvature diagram of the lens system with the layout shown in Fig. 4.
Fig. 6 is a distortion graph of the lens system with the layout shown in Fig. 4.
Fig. 7 is a MTF chart of the lens system with the layout shown in Fig. 4.
Fig. 8 is a schematic diagram of another layout of a lens system according to an embodiment of the present disclosure.
Fig. 9 is a field curvature diagram of the lens system with the layout shown in Fig. 8.
Fig. 10 is a distortion graph of the lens system with the layout shown in Fig. 8.
Fig. 11 is a MTF chart of the lens system with the layout shown in Fig. 8.
Fig. 12 is a schematic diagram of still another layout of a lens system according to an embodiment of the present disclosure.
Fig. 13 is a field curvature diagram of the lens system with the layout shown in Fig. 12.
Fig. 14 is a distortion graph of the lens system with the layout shown in Fig. 12.
Fig. 15 is a MTF chart of the lens system with the layout shown in Fig. 12.
Fig. 16 is a schematic diagram of still another layout of a lens system according to an embodiment of the present disclosure.
Fig. 17 is a field curvature diagram of the lens system with the layout shown in Fig. 16.
Fig. 18 is a distortion graph of the lens system with the layout shown in Fig. 16.
Fig. 19 is a MTF chart of the lens system with the layout shown in Fig. 16.
Fig. 20 is a schematic structural diagram of an optical fingerprint recognition apparatus according to an embodiment of the present disclosure.
Fig. 21 is a schematic block diagram of a terminal device according to an embodiment of the present disclosure.

### DETAILED DESCRIPTION OF EMBODIMENTS

Technical solutions of the present disclosure will be described below with reference to the drawings.

It should be understood that embodiments of the present disclosure may be applied to an apparatus for recognizing a fingerprint, or may be applied to a medical diagnostic product based on optical fingerprint imaging. The technical solutions of the embodiments of the present disclosure not only can perform fingerprint recognition, but also can perform other biometric feature recognition, such as blood pressure, blood oxygen or living body recognition, which is not limited in the embodiments of the present disclosure.

As an application scenario, an optical fingerprint system provided in an embodiment of the present disclosure can be applied to smart phones, tablet computers and other mobile terminals or other terminal devices with display screens. More specifically, in the above terminal devices, the fingerprint collection apparatus can be embodied as an optical fingerprint apparatus, which may be arranged in a local region or all regions under a display screen, thus forming an under-display optical fingerprint recognition system.

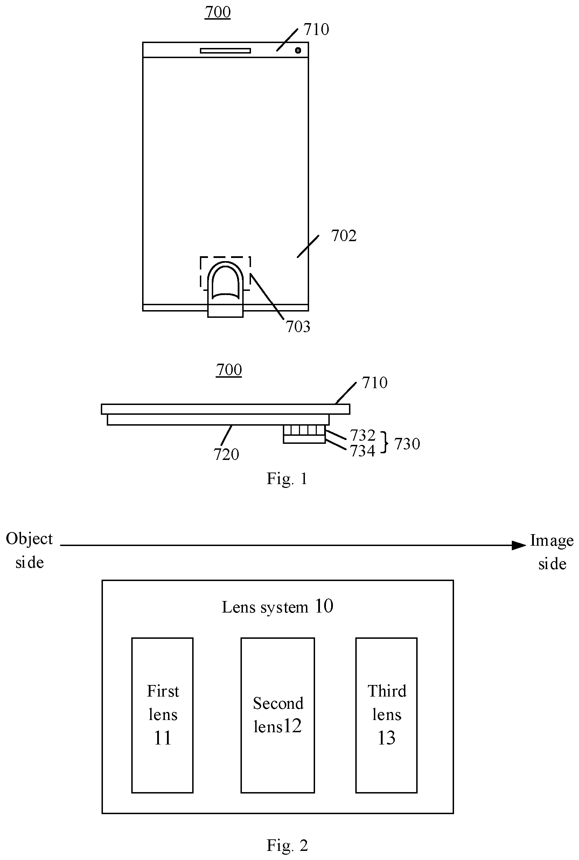

Fig. 1 shows a schematic structural diagram of a terminal device adapted to implement embodiments of the present disclosure. The terminal device 700 includes a display screen 720 and an optical fingerprint recognition apparatus 730, where the apparatus 730 for recognizing an optical fingerprint is arranged in a local region under the display screen 720. The apparatus 730 for recognizing an optical fingerprint includes a sensing array with a plurality of optical sensing units, and a region where the sensing array is located is a fingerprint detection region 703 of the optical fingerprint recognition apparatus 730. As shown in Fig. 1, the fingerprint detection region 703 is located in the display region 702 of the display screen 720. Therefore, when a user needs to perform unlocking, financial payment, or other fingerprint validation on the terminal device, he can realize fingerprint input simply by pressing his finger on the fingerprint detection region 703 located in the display screen 720. Since a fingerprint light signal reflected from the finger can penetrate through the display screen 702, and then be detected by the optical fingerprint recognition apparatus 730, the terminal device 700 using the above structure does not need to reserve a space specially for arranging a fingerprint button (such as a Home key) on its front face, thereby further improving a screen ratio of the terminal device 700.

In a preferred embodiment, the display screen 720 may be a display screen having a self-luminous display unit, for example, an organic light-emitting diode (OLED) display screen or a micro-LED display screen. Taking the OLED display screen as an example, the apparatus 730 for recognizing an optical fingerprint can use a display unit (i.e., an OLED light source) located in the fingerprint detection region 703 of the OLED display screen 720 as an excitation light source for optical fingerprint detection. Further, the sensing array of the apparatus 730 for recognizing an optical fingerprint is specifically a photodetector array, including a plurality of photodetectors in an array distribution, and the photodetectors can serve as the above optical sensing units. When the finger is pressed on the fingerprint detection region 703, light emitted from the display unit of the fingerprint detection region 703 is reflected on a surface fingerprint of the finger and forms reflected light, where the reflected light from a ridge of the fingerprint is different from reflected light from a valley of the fingerprint. The reflected light passes through the display screen 720, is received by the photodetector array, and is converted into a corresponding electrical signal, namely a fingerprint detection signal. Based on the fingerprint detection signal, fingerprint image data can be obtained, and fingerprint matching validation can be further performed, so that the optical fingerprint recognition function of the terminal device 700 can be realized.

It should be understood that in a specific implementation, the terminal device 700 may further include a transparent protective cover plate 710, where the cover plate 710 may be a glass cover plate or a sapphire cover plate located above the display screen 720 and covering a front face of the terminal device 700, because, in an embodiment of the present disclosure, the so-called finger pressing on the display screen 720 actually refers to pressing the cover plate 710 above the display screen 720 or a surface of a protective layer covering the cover plate 710.

As an optional implementation, as shown in Fig. 1, the optical fingerprint recognition apparatus 730 includes a light detection assembly 734 and an optical component 732. The light detection assembly 734 includes the sensing array, a reading circuit and other auxiliary circuits electrically connected with the sensing array, which can be fabricated on a die using a semiconductor technology. The optical component 732 may be arranged above the sensing array of the light detection assembly 134, and may specifically include a filter, a light guiding layer, and other optical elements. The filter may be used to filter out ambient light (such as infrared light) that penetrates the finger to avoid influence of strong light from an external environment on fingerprint recognition. The filter may be arranged on an upper surface of the sensing array, or may be arranged above the light guiding layer. For example, the sensing array may serve as a substrate. The filter is a coating film formed on the surface of the sensing array, or the filter may be fixed on the upper surface of the sensing array using a glue layer. The light guiding layer is mainly used for guiding the reflected light reflected from the finger surface to the sensing array for optical detection.

In a practical implementation, the optical component 732 and the light detection assembly 734 may be encapsulated into a same optical fingerprint die.

The light guiding layer may specifically be a microlens layer fabricated on a semiconductor silicon wafer, and has a plurality of microlens units. The reflected light reflected from the finger passes through the microlens units, and is received by the optical sensing unit thereunder, so that the sensing array can detect a fingerprint image of the finger.

In the optical fingerprint recognition apparatus 730, each microlens unit can correspond to one of the optical sensing units of the sensing array respectively. Alternatively, a non-one-to-one relationship may also be adopted between the microlens units and the optical sensing units of the sensing array to reduce generation of moire fringe interferences. For example, one optical sensing unit may correspond to a plurality of lens units, and one lens unit may correspond to a plurality of optical sensing units, or the microlens units may be arranged irregularly; and the irregularly arranged microlens units may be used to correct reflected light detected by each sensing unit using a post-processing software algorithm.

Optionally, the light guiding layer may also be a lens system, and the lens system includes at least two lenses arranged along a first direction, where the first direction is perpendicular to a direction of the optical sensing array. The reflected light (fingerprint light signal) reflected from the finger is converged by the lens system to the sensing array thereunder, and the sensing array further performs fingerprint imaging based on the fingerprint light signal.

In other alternative implementations, the display screen 720 may adopt a non-self-luminous display screen, such as a back-light liquid crystal display screen. In this case, the optical fingerprint recognition apparatus 730 cannot use the display unit of the display screen 720 as the excitation light source, so that it is necessary to integrate the excitation light source inside the optical fingerprint recognition apparatus 730 or provide the excitation light source outside it to realize optical fingerprint detection.

It should be understood that in an embodiment of the present disclosure, the sensing array in the optical fingerprint recognition apparatus may also be referred to as an image sensor or a photoelectric sensor, and may be fabricated into a DIE through processing using a semiconductor technology, i.e., the DIE includes an image sensor.

It should also be understood that the optical fingerprint recognition apparatus in embodiments of the present disclosure may also be referred to as an optical fingerprint recognition module, a fingerprint recognition apparatus, a fingerprint recognition module, a fingerprint module, a fingerprint collection apparatus, and the like.

In order to better understand the embodiments of the present disclosure, performance indicators of the lens are first introduced.

A Field of View (FOV) characterizes a range of a visual field of a lens. Under a condition of a same lens size, the larger the FOV of the lens is, the larger the region from which information can be obtained by the lens is, i.e., the more the information can be obtained using the lens.

A F-number is used to characterize an amount of light entering the sensing array of the optical fingerprint recognition apparatus device through the lens. The smaller the F-number is, the more the light enters the lens.

A distortion is used to measure a degree of visual distortion of an image. It is understandable that the smaller the distortion is, the better the imaging effects are.

Fig. 2 is a schematic structural diagram of a lens system according to an embodiment of the present disclosure. The lens system in the embodiment of the present disclosure is adapted to a terminal device with a display screen, and is used for imaging a to-be-tested object (such as a finger) on an upper surface of the display screen of the terminal device. As shown in Fig. 2, the lens system 10 includes: a first lens 11, a second lens 12, and a third lens 13 sequentially arranged from an object side to an image side, where the first lens 11 is a lens having a negative refractive power, a curvature radius of an object side surface of the first lens is a negative value, a curvature radius of an image side surface of the first lens is a positive value, and each curvature radius in the present disclosure refers to a paraxial curvature radius, i.e., a paraxial curved surface of the object side surface and a paraxial curved surface of the image side surface of the first lens are each a concave surface, i.e., the first lens is a biconcave lens having a negative refractive power; the second lens 12 is a lens having a positive refractive power, a curvature radius of an object side surface of the second lens is a positive value, and a curvature radius of an image side surface of the second lens is a negative value, i.e., the second lens 12 is a biconvex lens having a positive refractive power; and the third lens 13 is a lens having a positive refractive power, and a curvature radius of an object side surface of the third lens is a positive value, i.e., the object side surface of the third lens is a convex surface. It should be understood that the concave surface or convex surface here refers to a concave-convex condition of a surface of the lens along its optical axis direction.

Optionally, in some embodiments, a curvature radius of an image side surface of the third lens is a negative value, i.e., the image side surface of the third lens is a convex surface. In this case, the third lens is a biconvex lens.

Optionally, in some embodiments, the curvature radius of the image side surface of the third lens is a positive value, i.e., the image side surface of the third lens is a concave surface.

Optionally, in some embodiments, the first lens, the second lens, and the third lens may be made of a resin material or other plastic materials, which is not limited in embodiments of the present disclosure.

In an embodiment of the present disclosure, at least one surface of the lens system is an aspheric surface, i.e., at least one surface of at least one lens in the lens system is an aspheric surface, so as to correct an aberration generated at an edge of one of the lenses, and improve imaging quality of an edge region away from the optical axis in the lens. In addition, a spherical aberration can be eliminated by using an aspheric lens, and specifically, existence of the spherical aberration will affect imaging details.

Optionally, at least one surface among two surfaces of each lens in the lens system is an aspheric surface.

Optionally, two surfaces of each lens are each an aspheric surface, i.e., each lens in the lens system adopts an aspheric lens.

That is, when a surface of a lens in the lens system is designed as an aspheric surface, an aberration generated at an edge of the lens can be corrected, and a spherical aberration of the lens system can be eliminated. Further, if a surface of the third lens is designed as an aspheric surface, residual aberrations of the first lens and the second lens can be corrected, and imaging quality of the whole lens system can be improved.

Parameters of the lens system in the embodiment of the present disclosure satisfy a first relationship: -0.7<f1 *f3/TTL<-0.15, where f1 is a focal length of the first lens, f3 is a focal length of the third lens, and TTL is a distance from a lower surface of the display screen to an imaging surface, where the imaging surface may be an upper surface of the image sensor. Because a distance from the lower surface of the display screen to the first lens will affect key performance of the lens system such as FOV and semaphore, the TTL is particularly defined in embodiments of the present disclosure as a distance from a lower surface of a display screens to an imaging surface, to improve the performance of the lens system. The parameters of the lens system are designed to satisfy the first relationship, so that the first lens and the third lens have high refractive powers, can further effectively shorten a total length of the lenses, and can obtain a large FOV to improve the imaging quality of the lens system. Specifically, the smaller the focal length of a lens is, the higher the refractive power of the lens is, and the higher the focus level of light passing through the lens is. The smaller the absolute value of f1 is, the larger the deflection degree of light that just enters the lens system is at the first lens. A large FOV can be obtained whilst maintaining a short TTL, and a size of the field of view is maintained. When f3 is small, light can be re-deflected at a back end of the lens system, thus further shortening the TTL. When the lens system in the embodiment of the present disclosure is applied to an optical fingerprint recognition apparatus, fingerprint recognition performance can be improved. The lens system in the embodiment of the present disclosure is used to effectively shorten a longitudinal size of the optical fingerprint recognition apparatus using the lens system, so that the lens system or the optical fingerprint recognition apparatus can be better applied to a terminal device having size requirements, such as a mobile phone or a tablet computer, thereby enhancing applicability of the lens system, and additionally reserving more installation space for other devices in the terminal device. In addition, in the embodiments of the present disclosure, a longitudinal size of the lens system or the optical fingerprint recognition apparatus can be effectively shortened, and a large FOV can be obtained to improve the imaging quality of the lens system, and further improve the fingerprint recognition performance of the optical fingerprint recognition apparatus.

As an optional embodiment, the lens system in the embodiment of the present disclosure has a FOV of greater than 100 degrees. The parameters of the lens system are designed to satisfy the first relationship, so that the lens system has the FOV of greater than 100 degrees. In this way, under the condition of a same lens size, fingerprint information in a larger region can be collected, which is beneficial to improving resolving power for fingerprint recognition.

Optionally, the parameters of the lens system in the embodiment of the present disclosure satisfy at least one relationship among second relationships, where the second relationships include: -1.6<f1/f2<-0.6 and 0.2<f2/f3<1.2.

The second relationships further include: -1.7<f1/f12<-0.4 and 0.5<f2/f12<1.2.

The second relationships further include: 1.2<f2/f23<1.9 and 1.5<f3/f23<3.7.

The second relationships further include: relationships such as 1.2<f12/f23<2.7, 1.5<f12/f<3.8, and 1<f23/f<1.6, where f is a focal length of the lens system, f1 is a focal length of the first lens, f2 is a focal length of the second lens, f3 is a focal length of the third lens, f12 is a combined focal length of the first lens and the second lens, and f23 is a combined focal length of the second lens and the third lens. The focal length of each lens in the lens system, the combined focal length of every two adjacent lenses, and the focal length of the lens system are mutually restricted to form a complete lens system. When the lens system satisfies at least one relationship among the second relationships, a depth of field of the lens group can be reduced, influence of an internal laminated structure of the display screen on imaging can be weakened, and imaging quality of a particular surface, such as imaging quality of the upper surface of the display screen, can be improved.

Optionally, the parameters of the lens system in the embodiment of the present disclosure satisfy at least one relationship among third relationships, where the third relationships include: -1.2<r1/r2<-0.2, -2.7<r3/r4<-1.9, and -0.2<r5/r6<0.5. Curvature radiuses of two surfaces of each lens in the lens system are mutually restricted to prevent manufacturing accuracy of the lens surfaces from decreasing due to too small curvature radiuses and too large angle of the lens edges. This design can reduce sensitivity of the lens system to assembly tolerance, and improve yield of products. r1 is a curvature radius of an object side surface of the first lens, r2 is a curvature radius of an image side surface of the first lens, r3 is a curvature radius of an object side surface of the second lens, r4 is a curvature radius of an image side surface of the second lens, r5 is a curvature radius of the object side surface of the third lens, and r6 is a curvature radius of an image side surface of the third lens.

The parameters of the lens system in the embodiment of the present disclosure satisfy fourth relationships, and the fourth relationships include: 0.4<CT1/CT2<0.6 and 1.7<CT2/CT3<2.0, where CT1 is a thickness of the first lens along its optical axis direction, CT2 is a thickness of the second lens along its optical axis direction, and CT3 is a thickness of the third lens along its optical axis direction. Specifically, in order to correct an aberration of the lens system, and improve the imaging quality, a thickness of the second lens is greater than thicknesses of the other two lenses, and thicknesses of every two adjacent lenses in the lens system are mutually restricted. The above fourth relationships limit the thicknesses of the other two lenses to ensure that the thicknesses of the lenses satisfy processing requirements of the lens manufacturing process. In addition, this design limits the thicknesses of the lenses along optical axis directions thereof on the premise of satisfying the imaging quality, so that the lens system is more solid with improved service life.

Optionally, the first lens in the lens system satisfies: 0.7<f1/r1<1.4 and -1.1<f1/r2<-0.3. The focal length f1 of the first lens, the curvature radius r1 of the object side surface of the first lens, and the curvature radius r2 of the image side surface of the first lens are controlled to satisfy the above relationships, so that not only a large FOV can be obtained, but also a total length of the lens system can be reduced. Further, a longitudinal length of the optical fingerprint recognition apparatus using the lens system of the embodiment of the present disclosure can be shortened, so that the optical fingerprint recognition apparatus can be adapted to a terminal device with increasingly compact internal space at present, such as a mobile phone or a tablet computer.

Optionally, the second lens in the lens system satisfies: 0.4<f2/r3<0.8 and -1.6<f2/r4<-1.2. The focal length f2 of the second lens, the curvature radius r3 of the object side surface of the second lens, and the curvature radius r4 of the image side surface of the second lens are controlled to satisfy the above relationships, so that not only light is converged by the lens system, but also the aberration is reduced, thereby reducing the total length of the lens system, and further improving the imaging quality of the lens system.

Optionally, the third lens in the lens system satisfies: 1.4<f3/r5<3.0 and -0.3<f3/r6<1.3. The focal length f3 of the third lens, the curvature radius r5 of the object side surface of the third lens, and the curvature radius r6 of the image side surface of the third lens are controlled to satisfy the above relationships, so that light is converged by the lens system, the total length of the lens system is reduced, and the aberration is further corrected when a surface of the third lens is designed as an aspheric surface, thereby effectively improving the imaging quality of the lens system, and ensuring the image height.

Optionally, a refractive index n1 of a material of the first lens is greater than 1.50, a refractive index n2 of a material of the second lens is greater than 1.50, and a refractive index n3 of a material of the third lens is greater than 1.50.

Optionally, an abbe number v1 of the first lens is greater than 53.00, an abbe number v2 of the second lens is greater than 53.00, and an abbe number v3 of the third lens is greater than 53.00.

The lens system of the embodiment of the present disclosure further includes:
a stop arranged between the first lens and the second lens. The stop is a physical aperture of the lens system, and is used to limit system light.

Optionally, the lens system has an F-number of less than 2.0, which can shorten exposure time, improve detectivity of weak light signals (such as fingerprint light signals), and further improve imaging effects of the lens system.

Optionally, the lens system has a distortion of less than 5%, which is beneficial to reducing influence of moire fringes on fingerprint imaging. For example, when the lens system is applied under the display screen, the distortion of the lens system being less than 5% can alleviate influence of moire fringes caused by an internal circuit structure of the display screen.

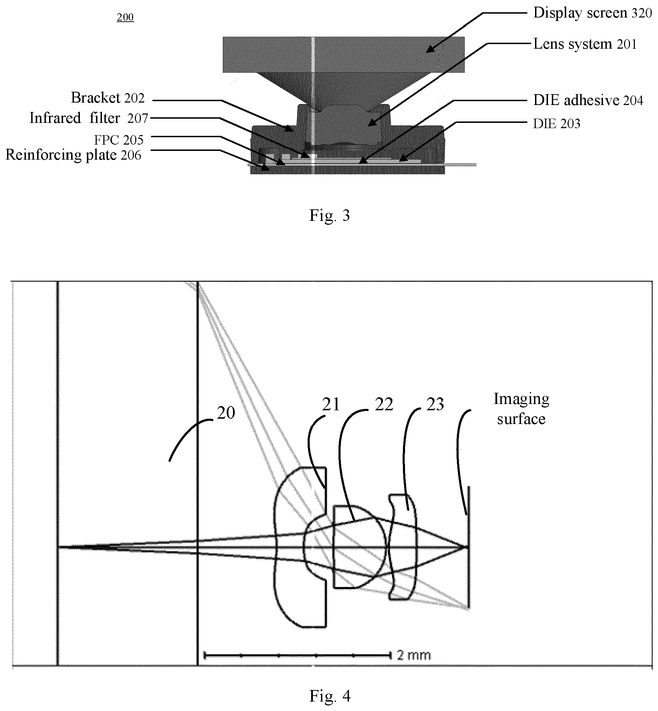

Fig. 3 is a schematic structural diagram of an optical fingerprint recognition apparatus using a lens system according to an embodiment of the present disclosure. As shown in Fig. 3, the apparatus 200 for recognizing an optical fingerprint can be arranged under a display screen 320 to realize under-display optical fingerprint detection. The apparatus 200 for recognizing an optical fingerprint may include: a lens system 201, a bracket 202, a DIE 203, a DIE adhesive 204, a Flexible Printed Circuit (FPC) 205, a reinforcing plate 206, and an Infrared Filter (IR Filter) 207.

The lens system 201 is configured to converge light signals (such as fingerprint light signals) reflected from an object above it, details as per the lens system shown in Fig. 2, which will not be repeated here. The bracket 202 is configured to fix the lens system 201, and connect the lens system 201 to the DIE 203, to control defocusing and eccentricity accuracy. Specifically, the bracket 202 is used to limit a position of the DIE 203, ensure that the DIE 203 and the lens system 201 remain parallel to avoid eccentricity, and ensure that the position of the DIE 203 is located on a best focusing plane. Or, the bracket 202 is used to fix the DIE 203 at a position deviating from the best focusing plane, so that an internal laminated structure of the display screen 320 fails in clearly imaging, but fingerprint imaging is within a depth of field, which can still satisfy fingerprint recognition requirements, thus overcoming influence of the internal laminated structure of the display screen 320 on the fingerprint imaging. The DIE 203 can correspond to the light detection assembly 734 in Fig. 1, is configured to convert the fingerprint light signals converged by the lens system 201 into electrical signals, and is further configured to perform fingerprint recognition. Optionally, the DIE 203 can be fixed on the Flexible Printed Circuit (FPC) 205 using the DIE adhesive 204, and the FPC 205 is used for electrically connecting the DIE 203 with an outside electrical terminal, for example, the FPC 205 is used for electrically connecting to a terminal device in which the optical fingerprint recognition apparatus is installed. The DIE adhesive 204 may be made of a polymer, such as an epoxy system, an acrylic acid system, or a polyurethane system, which is not limited in embodiments of the present disclosure. In addition, in order to enhance mechanical strength and reliability of the apparatus 200 for recognizing an optical fingerprint, the reinforcing plate 206 may be arranged under the FPC 205, where the reinforcing plate 206 may be a steel plate or a PCB.

Optionally, the apparatus 200 for recognizing an optical fingerprint may further include: an infrared filter 207 configured to filter infrared light, to prevent infrared light from affecting the fingerprint imaging. The infrared filter 207 may be arranged above the DIE 203. Further, the infrared filter 207 may be a filter film layer formed on a surface of the DIE 203, and the infrared filter 207 is fabricated on the surface of the DIE 203 using a semiconductor technology, such as evaporation or sputtering.

Optionally, a foam and a copper foil are arranged under a display screen 300, where the foam and the copper foil each have an opening, and the opening is used to be arranged above the lens system 201, to allow light signals within the FOV range of the lens system 201 to pass through.

In the embodiment of the present disclosure, the lens system 201 may be interference-fitted in the bracket 202, so that the lens system 201 and the DIE 203 are fit together, structural members of the optical fingerprint recognition apparatus can be glued together, and further, the apparatus 200 for recognizing an optical fingerprint may be fixed in a middle frame of the terminal device. For example, the middle frame has a through hole, and the apparatus 200 for recognizing an optical fingerprint is used to be installed in a through hole region on a lower surface of the middle frame. The fingerprint light signals can enter the lens system 201 through the through hole, and are further detected by the DIE 203.

The lens system of embodiments of the present disclosure and the condition when the lens system of the embodiments of the present disclosure is applied under a display screen will be specifically introduced below with reference to Embodiment 1 to Embodiment 4.

### Embodiment 1

In Embodiment 1 to Embodiment 4, the lens system includes three groups of lenses and a stop. Fig. 4, Fig. 8, Fig. 12, and Fig. 16 show four layouts of the lens system in Embodiment 1 to Embodiment 4, respectively. In the four layouts, a display screen 20, a first lens 21, a stop, a second lens 22, and a third lens 23 are sequentially arranged from an object side to an image side.

The first lens 21, the second lens 22, and the third lens 23 correspond to the first lens 11, the second lens 12, and the third lens 13 in Fig. 2 respectively, i.e., the first lens 21 is a lens having a negative refractive power, a curvature radius of an object side surface of the first lens is a negative value, and a curvature radius of an image side surface of the first lens is a positive value, i.e., the first lens is a biconcave lens having a negative refractive power; the second lens 22 is a lens having a positive refractive power, a curvature radius of an object side surface of the second lens is a positive value, and a curvature radius of an image side surface of the second lens is a negative value, i.e., the second lens 22 is a biconvex lens having a positive refractive power; and the third lens 23 is a lens having a positive refractive power, where a curvature radius of an object side surface of the third lens is a positive value, and a curvature radius of an image side surface of the third lens is a negative value, i.e., the third lens 23 is a biconvex lens having a positive refractive power. Optionally, at least one surface of the lens system is an aspheric surface. Other specific contents of the lens system are not repeated here, for which the corresponding contents in Fig. 2 may be referred to.

For ease of distinguishing and description, sequentially from an object side to an image side, an upper surface and a lower surface of the display screen 20 are denoted as S1 and S2 respectively, two surfaces of the first lens 21 are denoted as S3 and S4 respectively, a surface of the stop is denoted as S5, two surfaces of the second lens 22 are denoted as S6 and S7 respectively, two surfaces of the third lens 23 are denoted as S8 and S9 respectively, and an imaging surface is denoted as S10.

In Embodiment 1, the focal length, the curvature radius, the lens thickness, and the distance TTL from the lower surface of the display screen to the imaging surface within the lens system satisfy relationships listed in Table 1. f is a focal length of the lens system, f1 is a focal length of the first lens 21, f2 is a focal length of the second lens 22, f3 is a focal length of the third lens 23, f12 is a combined focal length of the first lens 21 and the second lens 22, f23 is a combined focal length of the second lens 22 and the third lens 23, r1 is the curvature radius of the object side surface of the first lens 21, r2 is the curvature radius of the image side surface of the first lens 21, r3 is the curvature radius of the object side surface of the second lens 22, r4 is the curvature radius of the image side surface of the second lens 22, r5 is the curvature radius of the object side surface of the third lens 23, r6 is the curvature radius of the image side surface of the third lens 23, CT1 is a thickness of the first lens 21 along its optical axis direction, CT2 is a thickness of the second lens 22 along its optical axis direction, CT3 is a thickness of the third lens 23 along its optical axis direction, and TTL is a distance from the lower surface of the display screen to the imaging surface.

**Table 1**

| Relationship | Parameters |
|---|---|
| f1/f2 | -0.913 |
| f2/f3 | 0.769 |
| f1/f12 | -0.753 |
| f2/f12 | 0.825 |
| f2/f23 | 1.606 |
| f3/f23 | 2.087 |
| f12/f23 | 1.946 |
| f12/f | 2.628 |
| f23/f | 1.350 |
| f1/r1 | 0.818 |
| f1/r2 | -0.904 |
| f2/r3 | 0.617 |
| f2/r4 | -1.425 |
| f3/r5 | 1.674 |
| f3/r6 | -0.181 |
| f1*f3/TTL | -0.270 |
| CT1/CT2 | 0.514 |
| CT2/CT3 | 1.906 |
| r1/r2 | -1.105 |
| r3/r4 | -2.309 |
| r5/r6 | -0.108 |

Parameters of the lens system are designed to satisfy a first relationship: - 0.7<f1*f3/TTL<-0.15, so that the first lens and the third lens have high refractive powers, can further effectively shorten a total length of the lenses, and can obtain a large FOV to improve imaging quality of the lens system. Specifically, the smaller the focal length of a lens is, the higher the refractive power of the lens is, and the higher the focus level of light passing through the lens is. The smaller the absolute value of f1 is, the larger the deflection degree of light that just enters the lens system is at the first lens. A large FOV can be obtained whilst maintaining a short TTL, and a size of the field of view is maintained. When f3 is small, light can be re-deflected at a back end of the lens system, thus further shortening the TTL. When the lens system in the embodiment of the present disclosure is applied to an optical fingerprint recognition apparatus, fingerprint recognition performance can be improved. The lens system in the embodiment of the present disclosure is used to effectively shorten a longitudinal size of the optical fingerprint recognition apparatus using the lens system, so that the lens system or the optical fingerprint recognition apparatus can be better applied to a terminal device having size requirements, such as a mobile phone or a tablet computer, thereby enhancing applicability of the lens system, and additionally reserving more installation space for other devices in the terminal device. In addition, in the embodiments of the present disclosure, a longitudinal size of the lens system or the optical fingerprint recognition apparatus can be effectively shortened, and a large FOV can be obtained to improve the imaging quality of the lens system, and further improve the fingerprint recognition performance of the optical fingerprint recognition apparatus.

As an optional embodiment, the lens system in the embodiment of the present disclosure has a FOV of greater than 100 degrees. The parameters of the lens system are designed to satisfy the first relationship, so that the lens system has the FOV of greater than 100 degrees. In this way, under the condition of a same lens size, fingerprint information in a larger region can be collected, which is beneficial to improving resolving power for fingerprint recognition.

The parameters of the lens system are designed to satisfy at least one relationship among second relationships: -1.6<f1/f2<-0.6, 0.2<f2/f3<1.2, -1.7<f1/f12<-0.4, 0.5<f2/f12<1.2, 1.2<f2/f23<1.9, 1.5<f3/f23<3.7, 1.2<f12/f23<2.7, 1.5<f12/f<3.8, and 1<f23/f<1.6. The focal length of each lens in the lens system, the combined focal length of every two adjacent lenses, and the focal length of the lens system are mutually restricted to form a complete lens system. When the lens system satisfies at least one relationship among the second relationships, a depth of field of the lens group can be reduced, influence of an internal laminated structure of the display screen on imaging can be weakened, and imaging quality of a particular surface, such as imaging quality of the upper surface of the display screen, can be improved.

The parameters of the lens system are designed to satisfy at least one relationship among third relationships: -1.2<r1/r2<-0.2, -2.7<r3/r4<-1.9, and -0.2<r5/r6<0.5. Because curvature radiuses of two surfaces of each lens in the lens system are mutually restricted to prevent manufacturing accuracy of the lens surfaces from decreasing due to too small curvature radiuses and too large angle of the lens edges, this design can reduce sensitivity of the lens system to assembly tolerance, and improve yield of products.

The parameters of the lens system are designed to satisfy fourth relationships: 0.4<CT1/CT2<0.6 and 1.7<CT2/CT3<2.0. Specifically, in order to correct an aberration of the lens system, and improve the imaging quality, a thickness of the second lens is greater than thicknesses of the other two lenses, and thicknesses of every two adjacent lenses in the lens system are mutually restricted. The above fourth relationships limit the thicknesses of the other two lenses to ensure that the thicknesses of the lenses satisfy processing requirements of the lens manufacturing process. In addition, this design limits the thicknesses of the lenses along optical axis directions thereof on the premise of satisfying the imaging quality, so that the lens system is more solid with improved service life.

The first lens 21 in the lens system is designed to satisfy: 0.7<f1/r1<1.4 and -1.1<f1/r2<-0.3, so that not only a large FOV can be obtained, but also a total length of the lens system can be reduced. Further, a longitudinal length of the optical fingerprint recognition apparatus using the lens system of the embodiment of the present disclosure can be shortened, so that the optical fingerprint recognition apparatus can be adapted to a terminal device with increasingly compact internal space at present, such as a mobile phone or a tablet computer.

The second lens 22 in the lens system is designed to satisfy: 0.4<f2/r3<0.8 and - 1.6<f2/r4<-1.2, so that not only light is converged by the lens system, but also the aberration is reduced, there reducing the total length of the lens system, and further improving the imaging quality of the lens system.

The third lens 23 in the lens system is designed to satisfy: 1.4<f3/r5<3.0 and - 0.3<f3/r6<1.3, so that light is converged by the lens system, the total length of the lens system is reduced, and the aberration is further corrected when a surface of the third lens is designed as an aspheric surface, thereby effectively improving the imaging quality of the lens system, and ensuring the image height. In Embodiment 1, parameters in Table 2 are used for a curvature radius, a thickness, a material, an effective diameter, and a conic coefficient of each surface among S1-S10 in the lens system, where among parameters of the thickness column in Table 2, S1 represents a thickness of the display screen 20, S2 represents a distance from a lower surface S2 of the display screen 20 to an object side surface S3 of the first lens 21, S3 represents a thickness of the first lens 21 along its optical axis direction, S4 represents a distance from an image side surface S4 of the first lens 21 to an upper surface of the stop, S5 represents a distance from the upper surface of the stop to an object side surface S6 of the second lens 22, S6 represents a thickness of the second lens 22 along its optical axis direction, S7 represents a distance from an image side surface S7 of the second lens 22 to an object side surface S8 of the third lens 23, S8 represents a thickness of the third lens 23 along its optical axis direction, and S9 represents a distance from an image side surface S9 of the third lens 23 to an imaging surface S10.

Parameters in Table 3 are used for aspheric high-order term coefficients A4, A6, A8, A10, A12, A14, A16, and A20 of the aspheric surfaces among S1-S10 of the lens system. The conic coefficient is also known as a quadric coefficient, and the aspheric high-order term coefficient represents non-parabolic deviation for controlling imaging quality at the periphery of a lens, i.e., controlling imaging quality in a non-paraxial region.

**Table 2**

| Surface | Surface type | Curvature radius | Thickness | Material | Effective diameter | Conic coefficient |
|---|---|---|---|---|---|---|
| S1 | Object surface | Unlimited | 1.5 | BK7 | 3.890 | 0.000 |
| S2 | Spherical surface | Unlimited | 0.851 | | 2.813 | 0.000 |
| S3 | Aspheric surface | -0.907 | 0.292 | APL5014CL | 0.781 | -30.235 |
| S4 | Aspheric surface | 0.821 | 0.309 | | 0.342 | -6.240 |
| S5 | Stop surface | Unlimited | 0.005 | | 0.225 | 0.000 |
| S6 | Aspheric surface | 1.318 | 0.567 | APL5014CL | 0.259 | 5.396 |
| S7 | Aspheric surface | -0.571 | 0.030 | | 0.443 | 0.597 |
| S8 | Aspheric surface | 0.631 | 0.297 | APL5014CL | 0.506 | -8.719 |
| S9 | Aspheric surface | -5.841 | 0.562 | | 0.574 | 94.058 |
| S10 | Imaging surface | | | | | |

**Table 3**

| Surface | A4 | A6 | A8 | A10 | A12 | A14 | A16 | A18 | A20 |
|---|---|---|---|---|---|---|---|---|---|
| S3 | 1.437E+00 | -1.816E+00 | 2.754E+00 | -6.586E+00 | 1.755E+01 | -2.462E+01 | 1.300E+01 | -2.016E+00 | 1.360E+00 |
| S4 | 2.189E+00 | 7.554E+01 | 2.626E+02 | -3.014E+04 | 3.943E+05 | -1.444E+06 | 6.195E+05 | -3.171E+05 | 3.551E+06 |
| S6 | -2.310E+00 | -4.634E+01 | 1.949E+03 | -3.815E+04 | 2.429E+05 | 2.693E+05 | -6.218E+06 | 2.122E+05 | -3.996E+05 |
| S7 | -5.258E+00 | 7.746E+01 | -8.662E+02 | 6.072E+03 | -2.499E+04 | 5.510E+04 | -5.040E+04 | 5.040E+04 | -5.040E+04 |
| S8 | -1.542E+00 | 1.448E+01 | -6.932E+01 | 1.341E+02 | -1.991E+02 | -2.734E+03 | 9.071E+03 | -2.644E+02 | 1.007E+03 |
| S9 | 4.300E-01 | -4.244E+00 | 6.902E+00 | -1.613E+01 | -3.194E+01 | 1.602E+02 | 1.580E+01 | 2.067E+01 | 1.433E+01 |

In Embodiment 1, the lens system has an F-number of 1.350, and a FOV of 129 degrees. Further, based on the parameters shown in Table 2 and Table 3, the parameters of the lens system shown in Embodiment 1 can be determined as follows: F=0.375 mm, TTL=2.913 mm (i.e., the distance from S2 to S10).

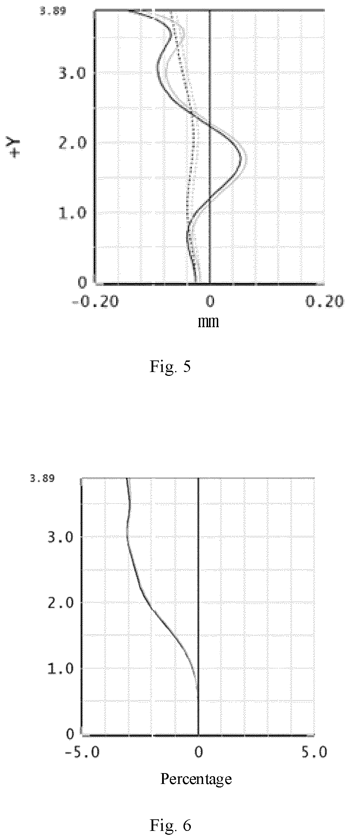

Under the above parameters, Fig. 5 to Fig. 7 show a field curvature diagram, a distortion graph, and a MTF chart of the lens system successively, all of which are used to characterize imaging effects of the lens system.

### Embodiment 2

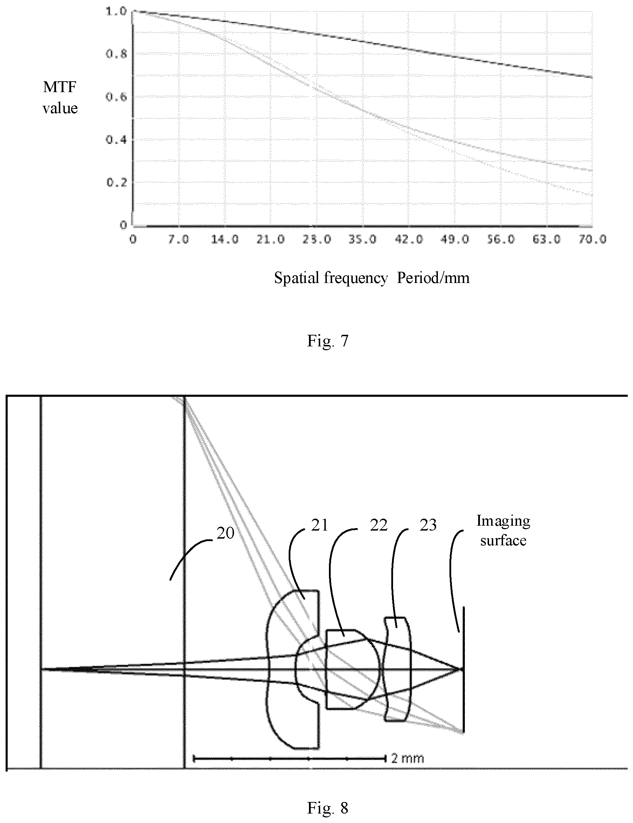

In Embodiment 2, referring to Fig. 8, a display screen 20, a first lens 21, a stop, a second lens 22, and a third lens 23 are sequentially arranged from an object side to an image side.

The first lens 21, the second lens 22, and the third lens 23 correspond to the first lens 11, the second lens 12, and the third lens 13 in Fig. 2 respectively, i.e., the first lens 21 is a lens having a negative refractive power, a curvature radius of an object side surface of the first lens is a negative value, and a curvature radius of an image side surface of the first lens is a positive value, i.e., the first lens is a biconcave lens having a negative refractive power; the second lens 22 is a lens having a positive refractive power, a curvature radius of an object side surface of the second lens is a positive value, and a curvature radius of an image side surface of the second lens is a negative value, i.e., the second lens 22 is a biconvex lens having a positive refractive power; and the third lens 23 is a lens having a positive refractive power, where a curvature radius of an object side surface of the third lens is a positive value, and a curvature radius of an image side surface of the third lens is a negative value, i.e., the third lens 23 is a biconvex lens having a positive refractive power. Optionally, at least one surface of the lens system is an aspheric surface. Other specific contents of the lens system are not repeated here, for which the corresponding contents in Fig. 2 may be referred to.

For ease of distinguishing and description, sequentially from an object side to an image side, an upper surface and a lower surface of the display screen 20 are denoted as S1 and S2 respectively, two surfaces of the first lens 21 are denoted as S3 and S4 respectively, a surface of the stop is denoted as S5, two surfaces of the second lens 22 are denoted as S6 and S7 respectively, two surfaces of the third lens 23 are denoted as S8 and S9 respectively, and an imaging surface is denoted as S10.

In Embodiment 2, a focal length, a curvature radius, a lens thickness, and a distance TTL from the lower surface of the display screen to the imaging surface within the lens system satisfy relationships listed in Table 4. f is a focal length of the lens system, f1 is a focal length of the first lens 21, f2 is a focal length of the second lens 22, f3 is a focal length of the third lens 23, f12 is a combined focal length of the first lens 21 and the second lens 22, f23 is a combined focal length of the second lens 22 and the third lens 23, r1 is the curvature radius of the object side surface of the first lens 21, r2 is the curvature radius of the image side surface of the first lens 21, r3 is the curvature radius of the object side surface of the second lens 22, r4 is the curvature radius of the image side surface of the second lens 22, r5 is the curvature radius of the object side surface of the third lens 23, r6 is the curvature radius of the image side surface of the third lens 23, CT1 is a thickness of the first lens 21 along its optical axis direction, CT2 is a thickness of the second lens 22 along its optical axis direction, CT3 is a thickness of the third lens 23 along its optical axis direction, and TTL is a distance from the lower surface of the display screen to the imaging surface.

**Table 4**

| Relationship | Parameters |
|---|---|
| f1/f2 | -0.942 |
| f2/f3 | 0.727 |
| f1/f12 | -0.807 |
| f2/f12 | 0.857 |
| f2/f23 | 1.592 |
| f3/f23 | 2.191 |
| f12/f23 | 1.858 |
| f12/f | 2.492 |
| f23/f | 1.341 |
| f1/r1 | 0.984 |
| f1/r2 | -0.748 |
| f2/r3 | 0.571 |
| f2/r4 | -1.460 |
| f3/r5 | 1.776 |
| f3/r6 | -0.058 |
| f1*f3/TTL | -0.292 |
| CT1/CT2 | 0.483 |
| CT2/CT3 | 1.925 |
| r1/r2 | -0.760 |
| r3/r4 | -2.559 |
| r5/r6 | -0.033 |

Parameters of the lens system are designed to satisfy a first relationship: - 0.7<f1*f3/TTL<-0.15, so that the first lens and the third lens have high refractive powers, can further effectively shorten a total length of the lenses, and can obtain a large FOV to improve imaging quality of the lens system. Specifically, the smaller the focal length of a lens is, the higher the refractive power of the lens is, and the higher the focus level of light passing through the lens is. The smaller the absolute value of f1 is, the larger the deflection degree of light that just enters the lens system is at the first lens. A large FOV can be obtained whilst maintaining a short TTL, and a size of the field of view is maintained. When f3 is small, light can be re-deflected at a back end of the lens system, thus further shortening the TTL. When the lens system in the embodiment of the present disclosure is applied to an optical fingerprint recognition apparatus, fingerprint recognition performance can be improved. The lens system in the embodiment of the present disclosure is used to effectively shorten a longitudinal size of the optical fingerprint recognition apparatus using the lens system, so that the lens system or the optical fingerprint recognition apparatus can be better applied to a terminal device having size requirements, such as a mobile phone or a tablet computer, thereby enhancing applicability of the lens system, and additionally reserving more installation space for other devices in the terminal device. In addition, in the embodiments of the present disclosure, a longitudinal size of the lens system or the optical fingerprint recognition apparatus can be effectively shortened, and a large FOV can be obtained to improve the imaging quality of the lens system, and further improve the fingerprint recognition performance of the optical fingerprint recognition apparatus.

As an optional embodiment, the lens system in the embodiment of the present disclosure has a FOV of greater than 100 degrees. The parameters of the lens system are designed to satisfy the first relationship, so that the lens system has the FOV of greater than 100 degrees. In this way, under the condition of a same lens size, fingerprint information in a larger region can be collected, which is beneficial to improving resolving power for fingerprint recognition.

The parameters of the lens system are designed to satisfy at least one relationship among second relationships: -1.6<f1/f2<-0.6,0.2<f2/f3<1.2, -1.7<f1/f12<-0.4, 0.5<f2/f12<1.2, 1.2<f2/f23<1.9, 1.5<f3/f23<3.7, 1.2<f12/f23<2.7, 1.5<f12/f<3.8, and 1<f23/f<1.6. The focal length of each lens in the lens system, the combined focal length of every two adjacent lenses, and the focal length of the lens system are mutually restricted to form a complete lens system. When the lens system satisfies at least one relationship among the second relationships, a depth of field of the lens group can be reduced, influence of an internal laminated structure of the display screen on imaging can be weakened, and imaging quality of a particular surface, such as imaging quality of the upper surface of the display screen, can be improved.

The parameters of the lens system are designed to satisfy at least one relationship among third relationships: -1.2<r1/r2<-0.2, -2.7<r3/r4<-1.9, and -0.2<r5/r6<0.5. Because curvature radiuses of two surfaces of each lens in the lens system are mutually restricted to prevent manufacturing accuracy of the lens surfaces from decreasing due to too small curvature radiuses and too large angle of the lens edges, this design can reduce sensitivity of the lens system to assembly tolerance, and improve yield of products.

The parameters of the lens system are designed to satisfy fourth relationships: 0.4<CT1/CT2<0.6 and 1.7<CT2/CT3<2.0. Specifically, in order to correct an aberration of the lens system, and improve the imaging quality, a thickness of the second lens is greater than thicknesses of the other two lenses, and thicknesses of every two adjacent lenses in the lens system are mutually restricted. The above fourth relationships limit the thicknesses of the other two lenses to ensure that the thicknesses of the lenses satisfy processing requirements of the lens manufacturing process. In addition, this design limits the thicknesses of the lenses along optical axis directions thereof on the premise of satisfying the imaging quality, so that the lens system is more solid with improved service life.

The first lens 21 in the lens system is designed to satisfy: 0.7<f1/r1<1.4 and -1.1<f1/r2<-0.3, so that not only a large FOV can be obtained, but also a total length of the lens system can be reduced. Further, a longitudinal length of the optical fingerprint recognition apparatus using the lens system of the embodiment of the present disclosure can be shortened, so that the optical fingerprint recognition apparatus can be adapted to a terminal device with increasingly compact internal space at present, such as a mobile phone or a tablet computer.

The second lens 22 in the lens system is designed to satisfy: 0.4<f2/r3<0.8 and - 1.6<f2/r4<-1.2, so that not only light is converged by the lens system, but also the aberration is reduced, there reducing the total length of the lens system, and further improving the imaging quality of the lens system.

The third lens 23 in the lens system is designed to satisfy: 1.4<f3/r5<3.0 and - 0.3<f3/r6<1.3, so that light is converged by the lens system, the total length of the lens system is reduced, and the aberration is further corrected when a surface of the third lens is designed as an aspheric surface, thereby effectively improving the imaging quality of the lens system, and ensuring the image height.

In Embodiment 2, parameters in Table 5 are used for a curvature radius, a thickness, a material, an effective diameter, and a conic coefficient of each surface among S1-S10 in the lens system, where among parameters of the thickness column in Table 5, S1 represents a thickness of the display screen 20, S2 represents a distance from a lower surface S2 of the display screen 20 to an object side surface S3 of the first lens 21, S3 represents a thickness of the first lens 21 along its optical axis direction, S4 represents a distance from an image side surface S4 of the first lens 21 to an upper surface of the stop, S5 represents a distance from the upper surface of the stop to an object side surface S6 of the second lens 22, S6 represents a thickness of the second lens 22 along its optical axis direction, S7 represents a distance from an image side surface S7 of the second lens 22 to an object side surface S8 of the third lens 23, S8 represents a thickness of the third lens 23 along its optical axis direction, and S9 represents a distance from an image side surface S9 of the third lens 23 to an imaging surface S10.

Parameters in Table 6 are used for aspheric high-order term coefficients A4, A6, A8, A10, A12, A14, A16, and A20 of the aspheric surfaces among S1-S10 of the lens system. The conic coefficient is also known as a quadric coefficient, and the aspheric high-order term coefficient represents non-parabolic deviation for controlling imaging quality at the periphery of a lens, i.e., controlling imaging quality in a non-paraxial region.

**Table 5**

| Surface | Surface type | Curvature radius | Thickness | Material | Effective diameter | Conic coefficient |
|---|---|---|---|---|---|---|
| S1 | Object surface | Unlimited | 1.500 | BK7 | 3.890 | 0.000 |
| S2 | Spherical surface | Unlimited | 0.888 | | 2.854 | 0.000 |
| S3 | Aspheric surface | -0.775 | 0.273 | APL5014CL | 0.802 | -20.012 |
| S4 | Aspheric surface | 1.020 | 0.309 | | 0.333 | -29.518 |
| S5 | Stop surface | Unlimited | 0.004 | | 0.234 | 0.000 |
| S6 | Aspheric surface | 1.419 | 0.565 | APL5014CL | 0.257 | 12.922 |
| S7 | Aspheric surface | -0.554 | 0.030 | | 0.416 | 0.172 |
| S8 | Aspheric surface | 0.627 | 0.293 | APL5014CL | 0.483 | -9.696 |
| S9 | Aspheric surface | -19.042 | 0.548 | | 0.531 | -90.124 |
| S10 | Imaging surface | | | | | |

**Table 6**

| Surface | A4 | A6 | A8 | A10 | A12 | A14 | A16 | A18 | A20 |
|---|---|---|---|---|---|---|---|---|---|
| S3 | 1.613E+00 | -3.625E+00 | 6.094E+00 | -7.383E+00 | 1.653E+01 | -2.495E+01 | 1.517E+01 | 5.660E+00 | -6.120E+00 |
| S4 | 7.120E+00 | 8.274E+01 | 6.043E+01 | -2.403E+04 | 3.830E+05 | -1.573E+06 | 8.794E+05 | 3.690E+06 | -3.881E+07 |
| S6 | -1.879E+00 | -8.200E+01 | 1.985E+03 | -2.878E+04 | 3.688E+05 | -7.629E+05 | -5.015E+07 | -6.232E+08 | 1.477E+10 |
| S7 | -6.049E+00 | 8.065E+01 | -8.553E+02 | 5.937E+03 | -2.604E+04 | 5.903E+04 | -3.695E+04 | -4.857E+04 | -1.980E+05 |
| S8 | -2.180E+00 | 1.827E+01 | -9.218E+01 | 6.894E+01 | 8.492E+01 | -1.266E+03 | 8.488E+03 | 8.147E+03 | -5.348E+04 |
| S9 | 6.470E-01 | -9.560E+00 | 4.587E+01 | -1.652E+02 | 1.671E+02 | -1.970E+02 | 1.739E+03 | 2.591E+03 | -1.634E+04 |

In Embodiment 2, the lens system has an F-number of 1.351, and a FOV of 128 degrees. Further, based on the parameters shown in Table 5 and Table 6, the parameters of the lens system shown in Embodiment 2 can be determined as follows: F=0.379 mm, TTL=2.910 mm (i.e., the distance from S2 to S10).

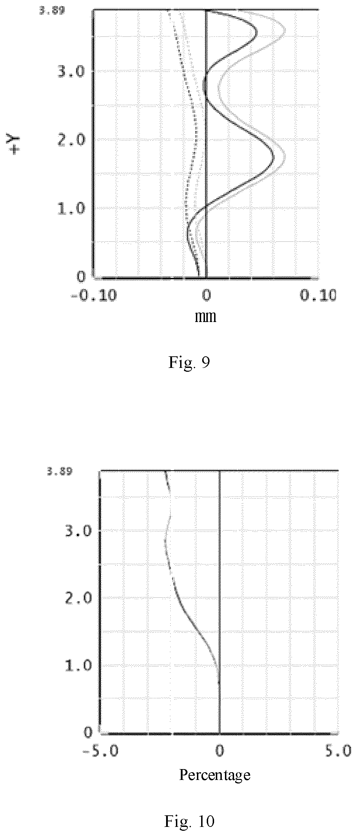

Under the above parameters, Fig. 9 to Fig. 11 show a field curvature diagram, a distortion graph, and a MTF chart of the lens system successively, all of which are used to characterize imaging effects of the lens system.

### Embodiment 3

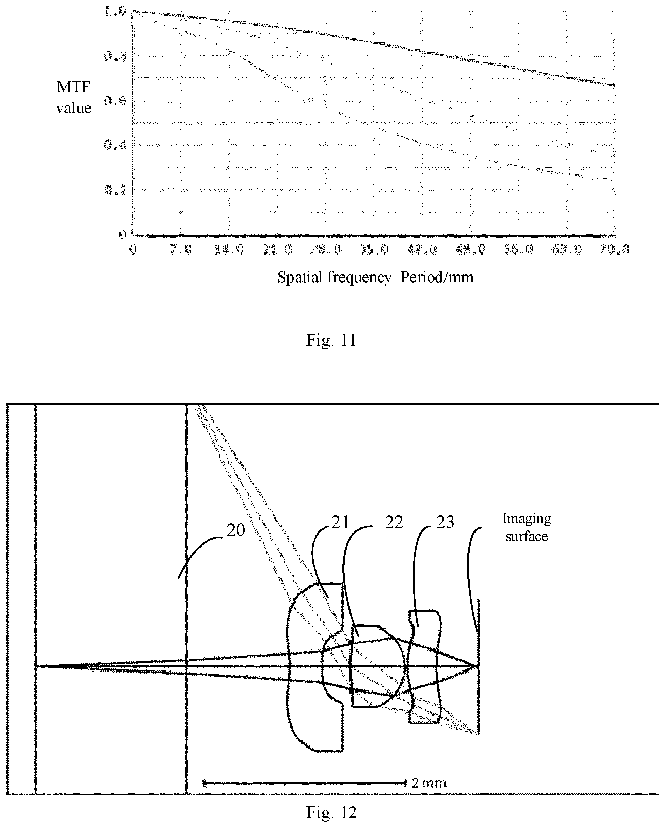

In Embodiment 3, referring to Fig. 12, a display screen 20, a first lens 21, a stop, a second lens 22, and a third lens 23 are sequentially arranged from an object side to an image side.

The first lens 21, the second lens 22, and the third lens 23 correspond to the first lens 11, the second lens 12, and the third lens 13 in Fig. 2 respectively, i.e., the first lens 21 is a lens having a negative refractive power, a curvature radius of an object side surface of the first lens is a negative value, and a curvature radius of an image side surface of the first lens is a positive value, i.e., the first lens is a biconcave lens having a negative refractive power; the second lens 22 is a lens having a positive refractive power, a curvature radius of an object side surface of the second lens is a positive value, and a curvature radius of an image side surface of the second lens is a negative value, i.e., the second lens 22 is a biconvex lens having a positive refractive power; and the third lens 23 is a lens having a positive refractive power, where a curvature radius of an object side surface of the third lens is a positive value, and a curvature radius of an image side surface of the third lens is a positive value, i.e., the third lens 23 is a lens with the object side surface being a convex surface, with the image side surface being a concave surface, and having a positive refractive power. Optionally, at least one surface of the lens system is an aspheric surface. Other specific contents of the lens system are not repeated here, for which the corresponding contents in Fig. 2 may be referred to.

For ease of distinguishing and description, sequentially from an object side to an image side, an upper surface and a lower surface of the display screen 20 are denoted as S1 and S2 respectively, two surfaces of the first lens 21 are denoted as S3 and S4 respectively, a surface of the stop is denoted as S5, two surfaces of the second lens 22 are denoted as S6 and S7 respectively, two surfaces of the third lens 23 are denoted as S8 and S9 respectively, and an imaging surface is denoted as S10.

In Embodiment 3, a focal length, a curvature radius, a lens thickness, and a distance TTL from the lower surface of the display screen to the imaging surface within the lens system satisfy relationships listed in Table 7. f is a focal length of the lens system, f1 is a focal length of the first lens 21, f2 is a focal length of the second lens 22, f3 is a focal length of the third lens 23, f12 is a combined focal length of the first lens 21 and the second lens 22, f23 is a combined focal length of the second lens 22 and the third lens 23, r1 is the curvature radius of the object side surface of the first lens 21, r2 is the curvature radius of the image side surface of the first lens 21, r3 is the curvature radius of the object side surface of the second lens 22, r4 is the curvature radius of the image side surface of the second lens 22, r5 is the curvature radius of the object side surface of the third lens 23, r6 is the curvature radius of the image side surface of the third lens 23, CT1 is a thickness of the first lens 21 along its optical axis direction, CT2 is a thickness of the second lens 22 along its optical axis direction, CT3 is a thickness of the third lens 23 along its optical axis direction, and TTL is a distance from the lower surface of the display screen to the imaging surface.

**Table 7**

| Relationship | Parameters |
|---|---|
| f1/f2 | -1.502 |
| f2/f3 | 0.381 |
| f1/f12 | -1.526 |
| f2/f12 | 1.016 |
| f2/f23 | 1.358 |
| f3/f23 | 3.563 |
| f12/f23 | 1.337 |
| f12/f | 1.628 |
| f23/f | 1.218 |
| f1/r1 | 1.063 |
| f1/r2 | -0.680 |
| f2/r3 | 0.675 |
| f2/r4 | -1.434 |
| f3/r5 | 2.806 |
| f3/r6 | 1.172 |
| f1*f3/TTL | -0.590 |
| CT1/CT2 | 0.582 |
| CT2/CT3 | 1.915 |
| r1/r2 | -0.640 |
| r3/r4 | -2.123 |
| r5/r6 | 0.418 |

Parameters of the lens system are designed to satisfy a first relationship: - 0.7<f1*f3/TTL<-0.15, so that the first lens and the third lens have high refractive powers, can further effectively shorten a total length of the lenses, and can obtain a large FOV to improve imaging quality of the lens system. Specifically, the smaller the focal length of a lens is, the higher the refractive power of the lens is, and the higher the focus level of light passing through the lens is. The smaller the absolute value of f1 is, the larger the deflection degree of light that just enters the lens system is at the first lens. A large FOV can be obtained whilst maintaining a short TTL, and a size of the field of view is maintained. When f3 is small, light can be re-deflected at a back end of the lens system, thus further shortening the TTL. When the lens system in the embodiment of the present disclosure is applied to an optical fingerprint recognition apparatus, fingerprint recognition performance can be improved. The lens system in the embodiment of the present disclosure is used to effectively shorten a longitudinal size of the optical fingerprint recognition apparatus using the lens system, so that the lens system or the optical fingerprint recognition apparatus can be better applied to a terminal device having size requirements, such as a mobile phone or a tablet computer, thereby enhancing applicability of the lens system, and additionally reserving more installation space for other devices in the terminal device. In addition, in the embodiments of the present disclosure, a longitudinal size of the lens system or the optical fingerprint recognition apparatus can be effectively shortened, and a large FOV can be obtained to improve the imaging quality of the lens system, and further improve the fingerprint recognition performance of the optical fingerprint recognition apparatus.

As an optional embodiment, the lens system in the embodiment of the present disclosure has a FOV of greater than 100 degrees. The parameters of the lens system are designed to satisfy the first relationship, so that the lens system has the FOV of greater than 100 degrees. In this way, under the condition of a same lens size, fingerprint information in a larger region can be collected, which is beneficial to improving resolving power for fingerprint recognition.

The parameters of the lens system are designed to satisfy at least one relationship among second relationships: -1.6<f1/f2<-0.6,0.2<f2/f3<1.2, -1.7<f1/f12<-0.4, 0.5<f2/f12<1.2, 1.2<f2/f23<1.9, 1.5<f3/f23<3.7, 1.2<f12/f23<2.7, 1.5<f12/f<3.8, and 1<f23/f<1.6. The focal length of each lens in the lens system, the combined focal length of every two adjacent lenses, and the focal length of the lens system are mutually restricted to form a complete lens system. When the lens system satisfies at least one relationship among the second relationships, a depth of field of the lens group can be reduced, influence of an internal laminated structure of the display screen on imaging can be weakened, and imaging quality of a particular surface, such as imaging quality of the upper surface of the display screen, can be improved.

The parameters of the lens system are designed to satisfy at least one relationship among third relationships: -1.2<r1/r2<-0.2, -2.7<r3/r4<-1.9, and -0.2<r5/r6<0.5. Because curvature radiuses of two surfaces of each lens in the lens system are mutually restricted to prevent manufacturing accuracy of the lens surfaces from decreasing due to too small curvature radiuses and too large angle of the lens edges, this design can reduce sensitivity of the lens system to assembly tolerance, and improve yield of products.

The parameters of the lens system are designed to satisfy fourth relationships: 0.4<CT1/CT2<0.6 and 1.7<CT2/CT3<2.0. Specifically, in order to correct an aberration of the lens system, and improve the imaging quality, a thickness of the second lens is greater than thicknesses of the other two lenses, and thicknesses of every two adjacent lenses in the lens system are mutually restricted. The above fourth relationships limit the thicknesses of the other two lenses to ensure that the thicknesses of the lenses satisfy processing requirements of the lens manufacturing process. In addition, this design limits the thicknesses of the lenses along optical axis directions thereof on the premise of satisfying the imaging quality, so that the lens system is more solid with improved service life.

The first lens 21 in the lens system is designed to satisfy: 0.7<f1/r1<1.4 and -1.1<f1/r2<-0.3, so that not only a large FOV can be obtained, but also a total length of the lens system can be reduced. Further, a longitudinal length of the optical fingerprint recognition apparatus using the lens system of the embodiment of the present disclosure can be shortened, so that the optical fingerprint recognition apparatus can be adapted to a terminal device with increasingly compact internal space at present, such as a mobile phone or a tablet computer.

The second lens 22 in the lens system is designed to satisfy: 0.4<f2/r3<0.8 and - 1.6<f2/r4<-1.2, so that not only light is converged by the lens system, but also the aberration is reduced, there reducing the total length of the lens system, and further improving the imaging quality of the lens system.

The third lens 23 in the lens system is designed to satisfy: 1.4<f3/r5<3.0 and - 0.3<f3/r6<1.3, so that light is converged by the lens system, the total length of the lens system is reduced, and the aberration is further corrected when a surface of the third lens is designed as an aspheric surface, thereby effectively improving the imaging quality of the lens system, and ensuring the image height.

In Embodiment 3, parameters in Table 8 are used for a curvature radius, a thickness, a material, an effective diameter, and a conic coefficient of each surface among S1-S10 in the lens system, where among parameters of the thickness column in Table 8, S1 represents a thickness of the display screen 20, S2 represents a distance from a lower surface S2 of the display screen 20 to an object side surface S3 of the first lens 21, S3 represents a thickness of the first lens 21 along its optical axis direction, S4 represents a distance from an image side surface S4 of the first lens 21 to an upper surface of the stop, S5 represents a distance from the upper surface of the stop to an object side surface S6 of the second lens 22, S6 represents a thickness of the second lens 22 along its optical axis direction, S7 represents a distance from an image side surface S7 of the second lens 22 to an object side surface S8 of the third lens 23, S8 represents a thickness of the third lens 23 along its optical axis direction, and S9 represents a distance from an image side surface S9 of the third lens 23 to an imaging surface S10.

Parameters in Table 9 are used for aspheric high-order term coefficients A4, A6, A8, A10, A12, A14, A16, and A20 of the aspheric surfaces among S1-S10 of the lens system. The conic coefficient is also known as a quadric coefficient, and the aspheric high-order term coefficient represents non-parabolic deviation for controlling imaging quality at the periphery of a lens, i.e., controlling imaging quality in a non-paraxial region.

**Table 8**

| Surface | Surface type | Curvature radius | Thickness | Material | Effective diameter | Conic coefficient |
|---|---|---|---|---|---|---|
| S1 | Object surface | Unlimited | 1.500 | BK7 | 3.890 | 0.000 |
| S2 | Spherical surface | Unlimited | 1.030 | | 2.879 | 0.000 |
| S3 | Aspheric surface | -0.932 | 0.318 | APL5014CL | 0.812 | -27.355 |
| S4 | Aspheric surface | 1.457 | 0.282 | | 0.336 | -6.023 |
| S5 | Stop surface | Unlimited | -0.004 | | 0.220 | 0.000 |
| S6 | Aspheric surface | 0.976 | 0.546 | APL5014CL | 0.250 | 12.540 |
| S7 | Aspheric surface | -0.460 | 0.028 | | 0.412 | 0.145 |
| S8 | Aspheric surface | 0.617 | 0.285 | APL5014CL | 0.456 | -6.848 |
| S9 | Aspheric surface | 1.476 | 0.420 | | 0.562 | 4.585 |
| S10 | Imaging surface | | | | | |

**Table 9**

| Surface | A4 | A6 | A8 | A10 | A12 | A14 | A16 | A18 | A20 |
|---|---|---|---|---|---|---|---|---|---|
| S3 | 1.243E+00 | -1.789E+00 | 2.662E+00 | -5.701E+00 | 1.694E+01 | -2.277E+01 | 1.042E+01 | -2.116E+00 | 4.488E+00 |
| S4 | 1.712E+00 | 8.538E+01 | 2.011E+02 | -2.870E+04 | 4.194E+05 | -1.579E+06 | 3.043E+05 | -4.122E+03 | 1.366E+05 |
| S6 | -3.187E+00 | -6.231E+01 | 1.393E+03 | -4.584E+04 | 5.091E+05 | 1.440E+06 | -6.332E+07 | 4.422E+05 | -3.288E+05 |
| S7 | -4.632E+00 | 7.946E+01 | -8.908E+02 | 6.267E+03 | -2.516E+04 | 5.392E+04 | -6.489E+04 | 4.171E+04 | -5.159E+04 |
| S8 | -1.810E+00 | 1.392E+01 | -7.512E+01 | 9.122E+01 | -3.115E+02 | -3.026E+03 | 1.338E+04 | -3.113E+03 | 1.308E+04 |
| S9 | 1.290E-01 | -5.601E+00 | 2.114E+00 | -2.005E+01 | 6.557E+00 | 3.708E+02 | -7.918E+02 | 3.968E+02 | -6.122E+02 |

In Embodiment 3, the lens system has an F-number of 1.350, and a FOV of 122 degrees. Further, based on the parameters shown in Table 8 and Table 9, the parameters of the lens system shown in Embodiment 1 can be determined as follows: F=0.404 mm, TTL=2.905 mm (i.e., the distance from S2 to S10).

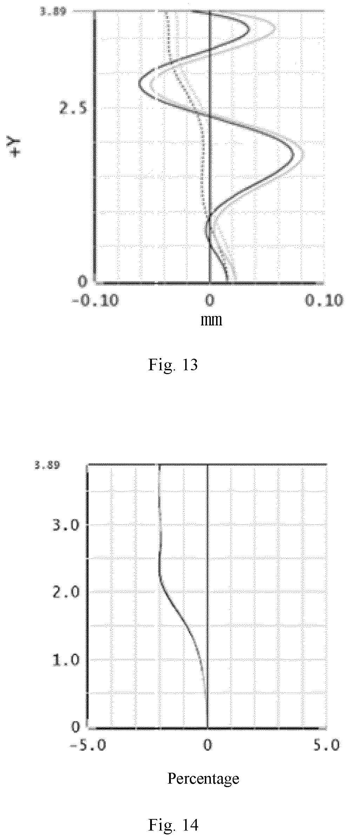

Under the above parameters, Fig. 13 to Fig. 15 show a field curvature diagram, a distortion graph, and a MTF chart of the lens system successively, all of which are used to characterize imaging effects of the lens system.

### Embodiment 4

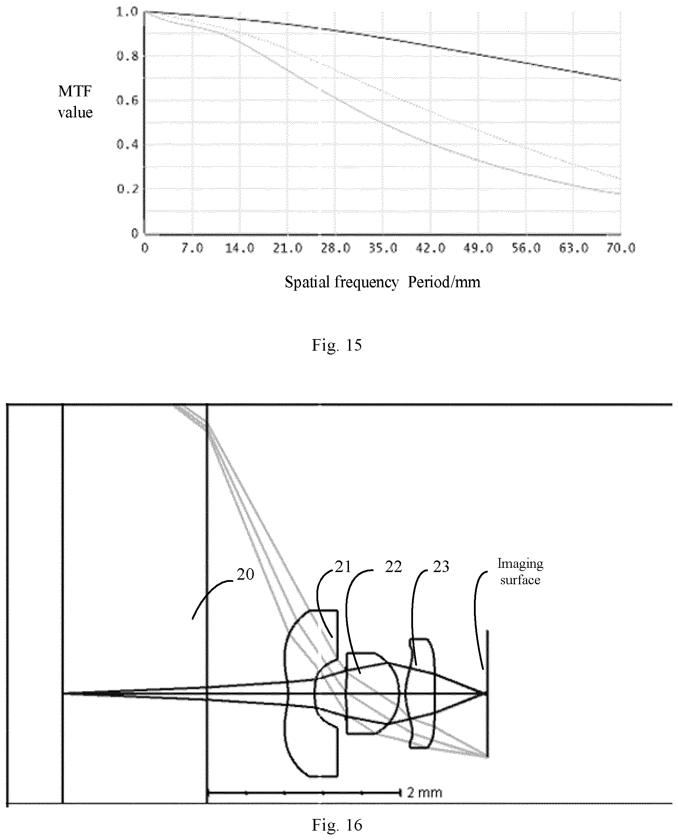

In Embodiment 4, referring to Fig. 16, a display screen 20, a first lens 21, a stop, a second lens 22, and a third lens 23 are sequentially arranged from an object side to an image side.

The first lens 21, the second lens 22, and the third lens 23 correspond to the first lens 11, the second lens 12, and the third lens 13 in Fig. 2 respectively, i.e., the first lens 21 is a lens having a negative refractive power, a curvature radius of an object side surface of the first lens is a negative value, and a curvature radius of an image side surface of the first lens is a positive value, i.e., the first lens is a biconcave lens having a negative refractive power; the second lens 22 is a lens having a positive refractive power, a curvature radius of an object side surface of the second lens is a positive value, and a curvature radius of an image side surface of the second lens is a negative value, i.e., the second lens 22 is a biconvex lens having a positive refractive power; and the third lens 23 is a lens having a positive refractive power, where a curvature radius of an object side surface of the third lens is a positive value, and a curvature radius of an image side surface of the third lens is a negative value, i.e., the third lens 23 is a biconvex lens having a positive refractive power. Optionally, at least one surface of the lens system is an aspheric surface. Other specific contents of the lens system are not repeated here, for which the corresponding contents in Fig. 2 may be referred to.

For ease of distinguishing and description, sequentially from an object side to an image side, an upper surface and a lower surface of the display screen 20 are denoted as S1 and S2 respectively, two surfaces of the first lens 21 are denoted as S3 and S4 respectively, a surface of the stop is denoted as S5, two surfaces of the second lens 22 are denoted as S6 and S7 respectively, two surfaces of the third lens 23 are denoted as S8 and S9 respectively, and an imaging surface is denoted as S10.

In Embodiment 4, a focal length, a curvature radius, a lens thickness, and a distance TTL from a lower surface of a display screen to an imaging surface within a lens system satisfy relationships listed in Table 10. f is a focal length of the lens system, f1 is a focal length of the first lens 21, f2 is a focal length of the second lens 22, f3 is a focal length of the third lens 23, f12 is a combined focal length of the first lens 21 and the second lens 22, f23 is a combined focal length of the second lens 22 and the third lens 23, r1 is the curvature radius of the object side surface of the first lens 21, r2 is the curvature radius of the image side surface of the first lens 21, r3 is the curvature radius of the object side surface of the second lens 22, r4 is the curvature radius of the image side surface of the second lens 22, r5 is the curvature radius of the object side surface of the third lens 23, r6 is the curvature radius of the image side surface of the third lens 23, CT1 is a thickness of the first lens 21 along its optical axis direction, CT2 is a thickness of the second lens 22 along its optical axis direction, CT3 is a thickness of the third lens 23 along its optical axis direction, and TTL is a distance from the lower surface of the display screen to the imaging surface.

**Table 10**

| Relationship | Parameters |
|---|---|
| f1/f2 | -0.786 |
| f2/f3 | 1.005 |
| f1/f12 | -0.548 |
| f2/f12 | 0.697 |
| f2/f23 | 1.775 |
| f3/f23 | 1.766 |
| f12/f23 | 2.545 |
| f12/f | 3.657 |
| f23/f | 1.437 |
| f1/r1 | 1.260 |
| f1/r2 | -0.483 |
| f2/r3 | 0.659 |
| f2/r4 | -1.355 |
| f3/r5 | 1.710 |
| f3/r6 | -0.145 |
| f1*f3/TTL | -0.231 |
| CT1/CT2 | 0.500 |
| CT2/CT3 | 1.814 |
| r1/r2 | -0.383 |
| r3/r4 | -2.057 |
| r5/r6 | -0.085 |

Parameters of the lens system are designed to satisfy a first relationship: - 0.7<f1*f3/TTL<-0.15, so that the first lens and the third lens have high refractive powers, can further effectively shorten a total length of the lenses, and can obtain a large FOV to improve imaging quality of the lens system. Specifically, the smaller the focal length of a lens is, the higher the refractive power of the lens is, and the higher the focus level of light passing through the lens is. The smaller the absolute value of f1 is, the larger the deflection degree of light that just enters the lens system is at the first lens. A large FOV can be obtained whilst maintaining a short TTL, and a size of the field of view is maintained. When f3 is small, light can be re-deflected at a back end of the lens system, thus further shortening the TTL. When the lens system in the embodiment of the present disclosure is applied to an optical fingerprint recognition apparatus, fingerprint recognition performance can be improved. The lens system in the embodiment of the present disclosure is used to effectively shorten a longitudinal size of the optical fingerprint recognition apparatus using the lens system, so that the lens system or the optical fingerprint recognition apparatus can be better applied to a terminal device having size requirements, such as a mobile phone or a tablet computer, thereby enhancing applicability of the lens system, and additionally reserving more installation space for other devices in the terminal device. In addition, in the embodiments of the present disclosure, a longitudinal size of the lens system or the optical fingerprint recognition apparatus can be effectively shortened, and a large FOV can be obtained to improve the imaging quality of the lens system, and further improve the fingerprint recognition performance of the optical fingerprint recognition apparatus.

As an optional embodiment, the lens system in the embodiment of the present disclosure has a FOV of greater than 100 degrees. The parameters of the lens system are designed to satisfy the first relationship, so that the lens system has the FOV of greater than 100 degrees. In this way, under the condition of a same lens size, fingerprint information in a larger region can be collected, which is beneficial to improving resolving power for fingerprint recognition.

The parameters of the lens system are designed to satisfy at least one relationship among second relationships: -1.6<f1/f2<-0.6,0.2<f2/f3<1.2, -1.7<f1/f12<-0.4, 0.5<f2/f12<1.2, 1.2<f2/f23<1.9, 1.5<f3/f23<3.7, 1.2<f12/f23<2.7, 1.5<f12/f<3.8, and 1<f23/f<1.6. The focal length of each lens in the lens system, the combined focal length of every two adjacent lenses, and the focal length of the lens system are mutually restricted to form a complete lens system. When the lens system satisfies at least one relationship among the second relationships, a depth of field of the lens group can be reduced, influence of an internal laminated structure of the display screen on imaging can be weakened, and imaging quality of a particular surface, such as imaging quality of the upper surface of the display screen, can be improved.

The parameters of the lens system are designed to satisfy at least one relationship among third relationships: -1.2<r1/r2<-0.2, -2.7<r3/r4<-1.9, and -0.2<r5/r6<0.5. Because curvature radiuses of two surfaces of each lens in the lens system are mutually restricted to prevent manufacturing accuracy of the lens surfaces from decreasing due to too small curvature radiuses and too large angle of the lens edges, this design can reduce sensitivity of the lens system to assembly tolerance, and improve yield of products.

The parameters of the lens system are designed to satisfy fourth relationships: 0.4<CT1/CT2<0.6 and 1.7<CT2/CT3<2.0. Specifically, in order to correct an aberration of the lens system, and improve the imaging quality, a thickness of the second lens is greater than thicknesses of the other two lenses, and thicknesses of every two adjacent lenses in the lens system are mutually restricted. The above fourth relationships limit the thicknesses of the other two lenses to ensure that the thicknesses of the lenses satisfy processing requirements of the lens manufacturing process. In addition, this design limits the thicknesses of the lenses along optical axis directions thereof on the premise of satisfying the imaging quality, so that the lens system is more solid with improved service life.

The first lens 21 in the lens system is designed to satisfy: 0.7<f1/r1<1.4 and -1.1<f1/r2<-0.3, so that not only a large FOV can be obtained, but also a total length of the lens system can be reduced. Further, a longitudinal length of the optical fingerprint recognition apparatus using the lens system of the embodiment of the present disclosure can be shortened, so that the optical fingerprint recognition apparatus can be adapted to a terminal device with increasingly compact internal space at present, such as a mobile phone or a tablet computer.

The second lens 22 in the lens system is designed to satisfy: 0.4<f2/r3<0.8 and - 1.6<f2/r4<-1.2, so that not only light is converged by the lens system, but also the aberration is reduced, there reducing the total length of the lens system, and further improving the imaging quality of the lens system.

The third lens 23 in the lens system is designed to satisfy: 1.4<f3/r5<3.0 and - 0.3<f3/r6<1.3, so that light is converged by the lens system, the total length of the lens system is reduced, and the aberration is further corrected when a surface of the third lens is designed as an aspheric surface, thereby effectively improving the imaging quality of the lens system, and ensuring the image height.

In Embodiment 4, parameters in Table 11 are used for a curvature radius, a thickness, a material, an effective diameter, and a conic coefficient of each surface among S1-S10 in the lens system, where among parameters of the thickness column in Table 11, S1 represents a thickness of the display screen 20, S2 represents a distance from a lower surface S2 of the display screen 20 to an object side surface S3 of the first lens 21, S3 represents a thickness of the first lens 21 along its optical axis direction, S4 represents a distance from an image side surface S4 of the first lens 21 to an upper surface of the stop, S5 represents a distance from the upper surface of the stop to an object side surface S6 of the second lens 22, S6 represents a thickness of the second lens 22 along its optical axis direction, S7 represents a distance from an image side surface S7 of the second lens 22 to an object side surface S8 of the third lens 23, S8 represents a thickness of the third lens 23 along its optical axis direction, and S9 represents a distance from an image side surface S9 of the third lens 23 to an imaging surface S10.

Parameters in Table 12 are used for aspheric high-order term coefficients A4, A6, A8, A10, A12, A14, A16, and A20 of the aspheric surfaces among S1-S10 of the lens system. The conic coefficient is also known as a quadric coefficient, and the aspheric high-order term coefficient represents non-parabolic deviation for controlling imaging quality at the periphery of a lens, i.e., controlling imaging quality in a non-paraxial region.

**Table 11**

| Surface | Surface type | Curvature radius | Thickness | Material | Effective diameter | Conic coefficient |
|---|---|---|---|---|---|---|
| S1 | Object surface | Unlimited | 1.500 | BK7 | 3.890 | 0.000 |
| S2 | Spherical surface | Unlimited | 0.846 | | 2.813 | 0.000 |
| S3 | Aspheric surface | -0.579 | 0.277 | APL5014CL | 0.823 | -14.988 |
| S4 | Aspheric surface | 1.510 | 0.315 | | 0.331 | 8.433 |
| S5 | Stop surface | Unlimited | 0.002 | | 0.234 | 0.000 |
| S6 | Aspheric surface | 1.409 | 0.555 | APL5014CL | 0.260 | 16.655 |
| S7 | Aspheric surface | -0.685 | 0.068 | | 0.419 | 0.889 |
| S8 | Aspheric surface | 0.540 | 0.306 | APL5014CL | 0.543 | -6.689 |
| S9 | Aspheric surface | -6.389 | 0.547 | | 0.565 | -60.001 |
| S10 | Imaging surface | | | | | |

**Table 12**

| Surface | A4 | A6 | A8 | A10 | A12 | A14 | A16 | A18 | A20 |
|---|---|---|---|---|---|---|---|---|---|
| S3 | 2.377E+00 | -8.631E+00 | 2.612E+01 | -5.435E+01 | 7.387E+01 | -5.770E+01 | 1.934E+01 | -9.660E-01 | 1.032E+00 |
| S4 | 1.263E+01 | -2.149E+02 | 5.762E+03 | -9.292E+04 | 8.998E+05 | -4.087E+06 | 7.986E+06 | -1.066E+06 | 3.316E+06 |
| S6 | -1.582E+00 | -1.266E+02 | 5.260E+03 | -1.401E+05 | 1.866E+06 | -1.187E+07 | 3.518E+07 | -4.087E+06 | 7.986E+06 |
| S7 | -6.619E+00 | 1.216E+02 | -2.106E+03 | 2.350E+04 | -1.499E+05 | 5.014E+05 | -6.790E+05 | 1.336E+00 | -6.664E+00 |
| S8 | -2.048E+00 | 3.554E+01 | -5.404E+02 | 4.985E+03 | -2.570E+04 | 6.510E+04 | -6.267E+04 | 3.386E+00 | -6.140E-01 |
| S9 | 1.123E+00 | -1.654E+01 | 6.687E+01 | 8.897E+01 | -1.978E+03 | 6.271E+03 | -6.200E+03 | 5.770E+00 | -8.973E+00 |

In Embodiment 4, the lens system has an F-number of 1.351, and a FOV of 130 degrees. Further, based on the parameters shown in Table 2 and Table 3, the parameters of the lens system shown in Embodiment 1 can be determined as follows: F=0.369 mm, TTL=2.916 mm (i.e., the distance from S2 to S10).

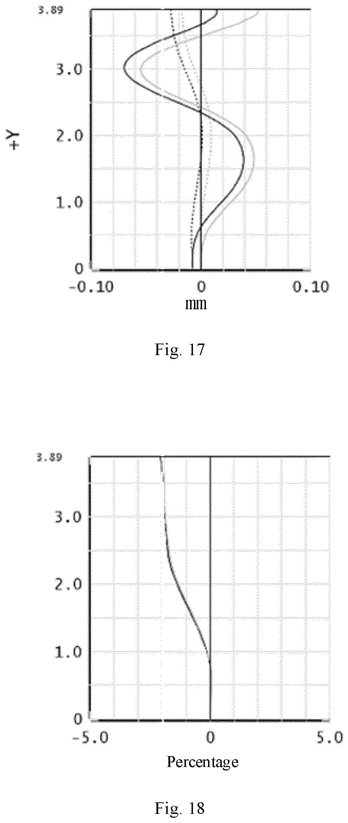

Under the above parameters, Fig. 17 to Fig. 19 show a field curvature diagram, a distortion graph, and a MTF chart of the lens system successively, all of which are used to characterize imaging effects of the lens system.

To sum up, the lens system of the embodiment of the present disclosure provides a wide-angle short-focus lens, and a total length of lenses in the lens system is short, thus effectively shortening a longitudinal size of an optical fingerprint recognition apparatus using the lens system, so that the lens system or the optical fingerprint recognition apparatus can be better applied to a terminal device having size requirements, thereby enhancing applicability of the lens system, and additionally reserving more installation space for other devices in the terminal device. In addition, while the total length of the lenses in the lens system is shortened, a large FOV can still be obtained, and fingerprint information in a larger region can be collected to obtain a fingerprint image of a larger region. Further, while the total length of the lenses in the lens system is shortened, a small F-number and a small distortion can still be maintained, thereby ensuring light signals entering the lens system, and the imaging effects.

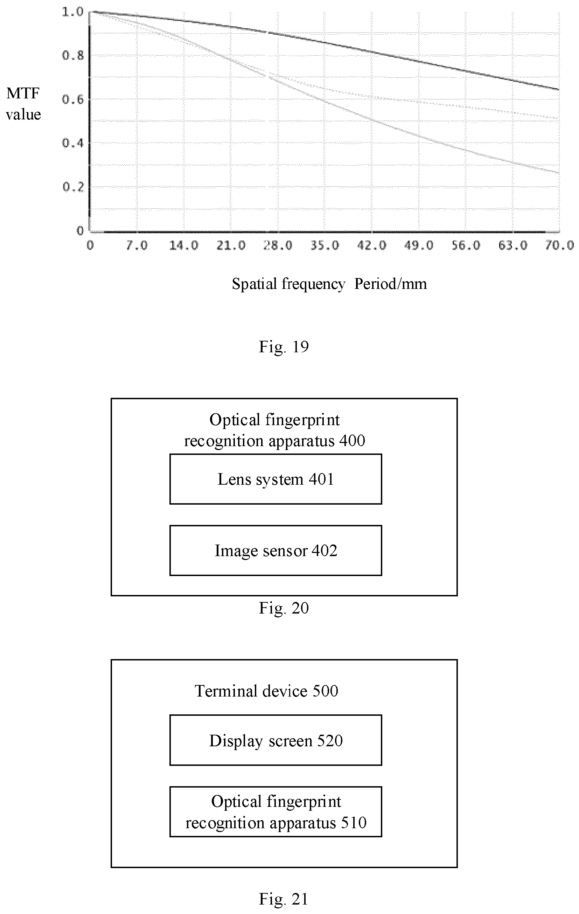

Fig. 20 is a schematic block diagram of an optical fingerprint recognition apparatus according to an embodiment of the present disclosure. As shown in Fig. 20, the apparatus 400 for recognizing an optical fingerprint may include a lens system 401, where the lens system 401 may be the lens system 10 in the above embodiments.

Optionally, the apparatus for recognizing a fingerprint may include an image sensor 402 arranged under the lens system 401 for receiving a fingerprint light signal converged by the lens system, and processing the fingerprint light signal to acquire fingerprint information included in the fingerprint light signal.

Optionally, the apparatus 400 for recognizing a fingerprint corresponds to the apparatus 200 for recognizing an optical fingerprint shown in Fig. 3, and the apparatus 400 for recognizing an optical fingerprint may further include structures in the apparatus 200 for recognizing an optical fingerprint, such as the bracket 202 and the infrared filter 207, where the lens system is interference-fitted in the bracket, the infrared filter 207 may be arranged above the DIE 203, and further, the infrared filter 207 may be a filter film layer or a coating film formed on a surface of the DIE 203, the infrared filter 207 is fabricated on the surface of the DIE 203 using a semiconductor technology, such as evaporation or sputtering. Here, the infrared filter 207 is arranged on the surface of the DIE 203, and is actually arranged on a surface of an image sensor of the DIE 203. The DIE 203 serves as a substrate of the filter film layer to bear the filter film layer, and the filter film layer is integrated onto the DIE 203 to save a substrate of the infrared filter, thereby contributing to reducing a thickness of the optical fingerprint recognition apparatus.

An embodiment of the present disclosure further provides a terminal device. As shown in Fig. 21, the terminal device 500 includes an apparatus 510 for recognizing an optical fingerprint, where the apparatus 510 for recognizing an optical fingerprint may be the apparatus 400 for recognizing an optical fingerprint in the above embodiments or the apparatus 200 for recognizing an optical fingerprint in the embodiment shown in Fig. 3.

Optionally, the terminal device may further include a display screen 520, and the apparatus 510 for recognizing an optical fingerprint is arranged under the display screen 520.

Optionally, the terminal device further includes a foam and a copper foil arranged under the display screen 520, where the foam and the copper foil each have an opening, and the opening of the foam and the opening of the copper foil correspond to top of the lens system of the apparatus 510 for recognizing an optical fingerprint, such that a fingerprint light signal including fingerprint information enters the lens system.

As an example and non-restrictively, the terminal device 500 may be, e.g., a mobile phone, a tablet computer, a notebook computer, a desktop computer, a vehicle electronic device, or a wearable smart device. The wearable smart device includes a device that has complete functions and a large size, and can realize complete or partial functions without relying on a smart phone, such as a smart watch or smart glasses, and includes a device that only focuses on a certain type of application functions and needs to be used in combination with other devices such as a smart phone, such as various smart bracelets and smart jewelries for monitoring physical signs.

It should be understood that the specific examples in the embodiments of the present disclosure are provided only to help those skilled in the art to better understand the embodiments of the present disclosure, rather than limiting the scope of the embodiments of the present disclosure.

While the above description merely provides specific embodiments of the present disclosure, the scope of protection of the present disclosure is not limited to the specific embodiments. Any person skilled in the present technical field can easily conceive of alterations or replacements within the technical scope disclosed in the present disclosure. All alterations or replacements should be encompassed within the scope of protection of the present disclosure. Therefore, the scope of protection of the present disclosure should be determined by the scope of protection of the appended claims.

## Claims

1. A lens system (10) for an optical fingerprint recognition apparatus, which is arrangable under a display screen to realize under-display optical fingerprint detection, the lens system comprising: a first lens (11), a stop, a second lens (12), and a third lens (13) sequentially arranged from an object side to an image side; wherein the first lens (11) is a biconcave lens having a negative refractive power; the second lens (12) is a biconvex lens having a positive refractive power; and the third lens (13) is a lens having a positive refractive power, wherein an object side surface of the third lens (13) is a convex surface, and parameters of the lens system (10) satisfy a first relationship: -0.7 mm < f1*f3/TTL < -0.15 mm, wherein f1 is a focal length of the first lens (11), f3 is a focal length of the third lens (13), and TTL is a distance from a lower surface of the display screen (20) to an upper surface of an image sensor (402) which is included in the optical fingerprint recognition apparatus and arranged under the lens system (10); the parameters of the lens system (10) satisfy fourth relationships, and the fourth relationships comprise: 0.4 < CT1/CT2 < 0.6 and 1.7 < CT2/CT3 < 2.0, wherein CT1 is a thickness of the first lens (11) along its optical axis direction, CT2 is a thickness of the second lens (12) along its optical axis direction, and CT3 is a thickness of the third lens (13) along its optical axis direction.

2. The lens system according to claim 1, wherein the parameters of the lens system satisfy at least one relationship among second relationships, and the second relationships comprise: - 1.6<f1/f2<-0.6, 0.2<f2/f3<1.2, -1.7<f1/f12<-0.4, 0.5<f2/f12<1.2, 1.2<f2/f23<1.9, 1.5<f3/f23<3.7, 1.2<f12/f23<2.7, 1.5<f12/f<3.8, and 1<f23/f<1.6, wherein wherein f is a focal length of the lens system, f2 is a focal length of the second lens, f12 is a combined focal length of the first lens and the second lens, and f23 is a combined focal length of the second lens and the third lens.

3. The lens system according to claim 1 or 2, wherein the parameters of the lens system satisfy at least one relationship among third relationships, and the third relationships comprise: -1.2<r1/r2<-0.2, -2.7<r3/r4<-1.9, and -0.2<r5/r6<0.5, wherein r1 is a curvature radius of an object side surface of the first lens, r2 is a curvature radius of an image side surface of the first lens, r3 is a curvature radius of an object side surface of the second lens, r4 is a curvature radius of an image side surface of the second lens, r5 is a curvature radius of the object side surface of the third lens, and r6 is a curvature radius of an image side surface of the third lens.

4. The lens system according to any one of claims 1 to 3, wherein the first lens in the lens system satisfies: 0.7<f1/r1<1.4 and -1.1<f1/r2<-0.3, wherein f1 is the focal length of the first lens, r1 is the curvature radius of the object side surface of the first lens, and r2 is the curvature radius of the image side surface of the first lens.

5. The lens system according to any one of claims 1 to 3, wherein the second lens in the lens system satisfies 0.4<f2/r3<0.8 and -1.6<f2/r4<-1.2, wherein f2 is the focal length of the second lens, r3 is the curvature radius of the object side surface of the second lens, and r4 is the curvature radius of the image side surface of the second lens.

6. The lens system according to any one of claims 1 to 3, wherein the third lens in the lens system satisfies: 1.4<f3/r5<3.0 and -0.3<f3/r6<1.3, wherein f3 is the focal length of the third lens, r5 is the curvature radius of the object side surface of the third lens, and r6 is the curvature radius of the image side surface of the third lens.

7. The lens system according to any one of claims 1 to 3, wherein the lens system has a FOV of greater than 100 degrees.

8. The lens system according to any one of claims 1 to 3, wherein the lens system has an F-number of less than 2.0, and has a distortion of less than 5%.

9. The lens system according to any one of claims 1 to 3, wherein the image side surface of the third lens is a convex surface or a concave surface.

10. An optical fingerprint recognition apparatus, comprising:
the lens system according to any one of claims 1 to 9.

11. The optical fingerprint recognition apparatus according to claim 10, wherein the optical fingerprint recognition apparatus further comprises:
a bracket, wherein the lens system is interference-fitted in the bracket;
an image sensor arranged under the lens system for receiving a fingerprint light signal converged by the lens system, and processing the fingerprint light signal to acquire fingerprint information included in the fingerprint light signal; and
an infrared filter arranged as a filter film layer formed on a surface of the image sensor.

12. A terminal device, comprising: a display screen and the optical fingerprint recognition apparatus according to claim 10 or 11, wherein the optical fingerprint recognition apparatus is arranged under the display screen.

13. The terminal device according to claim 12, wherein the terminal device further comprises:
a foam and a copper foil arranged under the display screen, wherein the foam and the copper foil each have an opening, and the opening of the foam and the opening of the copper foil correspond to top of the lens system of the optical fingerprint recognition apparatus, such that a fingerprint light signal including fingerprint information enters the lens system.

## Patentansprüche

1. Linsensystem (10) für eine optische Fingerabdruckerkennungsvorrichtung, die unterhalb eines Anzeigebildschirms anordenbar ist, um eine optische Under-Display-Fingerabdruckdetektion zu realisieren, wobei das Linsensystem eine erste Linse (11), eine Blende, eine zweite Linse (12) und eine dritte Linse (13) umfasst, die nacheinander von einer Objektseite zu einer Bildseite angeordnet sind; wobei die erste Linse (11) eine bikonkave Linse mit einer negativen Brechkraft ist; die zweite Linse (12) eine bikonvexe Linse mit einer positiven Brechkraft ist; und die dritte Linse (13) eine Linse mit einer positiven Brechkraft ist, wobei eine objektseitige Oberfläche der dritten Linse (13) eine konvexe Oberfläche ist und Parameter des Linsensystems (10) eine erste Beziehung -0,7 mm < f1*f3/TTL < -0,15 mm erfüllen, wobei f1 für eine Brennweite der ersten Linse (11), f3 für eine Brennweite der dritten Linse (13) und TTL für einen Abstand von einer unteren Oberfläche des Anzeigebildschirms (20) zu einer oberen Oberfläche eines Bildsensors (402) steht, der in der optischen Fingerabdruckerkennungsvorrichtung enthalten ist und unterhalb des Linsensystems (10) angeordnet ist; wobei die Parameter des Linsensystems (10) vierte Beziehungen erfüllen, und zu den vierten Beziehungen 0,4 < CT1/CT2 < 0,6 und 1,7 < CT2/CT3 < 2,0 gehören, wobei CT1 für eine Dicke der ersten Linse (11) in ihrer optischen Achsenrichtung, CT2 für eine Dicke der zweiten Linse (12) in ihrer optischen Achsenrichtung und CT3 für eine Dicke der dritten Linse (13) in ihrer optischen Achsenrichtung steht.

2. Linsensystem nach Anspruch 1, wobei die Parameter des Linsensystems mindestens eine von zweiten Beziehungen erfüllen, und zu den zweiten Beziehungen -1,6 < f1/f2 < -0,6, 0,2 < f2/f3 < 1,2, -1,7 < f1/f12 < -0,4, 0,5 < f2/f12 < 1,2, 1,2 < f2/f23 < 1,9, 1,5 < f3/f23 < 3,7, 1,2 < f12/f23 < 2,7, 1,5 < f12/f < 3,8 und 1 < f23/f < 1,6 gehören, wobei f für eine Brennweite des Linsensystems, f2 für eine Brennweite der zweiten Linse, f12 für eine kombinierte Brennweite der ersten Linse und der zweiten Linse und f23 für eine kombinierte Brennweite der zweiten Linse und der dritten Linse steht.

3. Linsensystem nach Anspruch 1 oder 2, wobei die Parameter des Linsensystems mindestens eine von dritten Beziehungen erfüllen, und zu den dritten Beziehungen -1,2 < r1/r2 < -0,2, -2,7 < r3/r4 < -1,9 und -0,2 < r5/r6 < 0,5 gehören, wobei r1 für einen Krümmungsradius einer objektseitigen Oberfläche der ersten Linse, r2 für einen Krümmungsradius einer bildseitigen Oberfläche der ersten Linse, r3 für einen Krümmungsradius einer objektseitigen Oberfläche der zweiten Linse, r4 für einen Krümmungsradius einer bildseitigen Oberfläche der zweiten Linse, r5 für einen Krümmungsradius der objektseitigen Oberfläche der dritten Linse und r6 für einen Krümmungsradius einer bildseitigen Oberfläche der dritten Linse steht.

4. Linsensystem nach einem der Ansprüche 1 bis 3, wobei für die erste Linse in dem Linsensystem 0,7 < f1/r1 < 1,4 und -1,1 < f1/r2 < -0,3 gelten, wobei f1 für die Brennweite der ersten Linse, r1 für den Krümmungsradius der objektseitigen Oberfläche der ersten Linse und r2 für den Krümmungsradius der bildseitigen Oberfläche der ersten Linse steht.

5. Linsensystem nach einem der Ansprüche 1 bis 3, wobei für die zweite Linse in dem Linsensystem 0,4 < f2/r3 < 0,8 und -1,6 < f2/r4 < -1,2 gelten, wobei f2 für die Brennweite der zweiten Linse, r3 für den Krümmungsradius der objektseitigen Oberfläche der zweiten Linse und r4 für den Krümmungsradius der bildseitigen Oberfläche der zweiten Linse steht.

6. Linsensystem nach einem der Ansprüche 1 bis 3, wobei für die dritte Linse in dem Linsensystem 1,4 < f3/r5 < 3,0 und -0,3 < f3/r6 < 1,3 gelten, wobei f3 für die Brennweite der dritten Linse, r5 für den Krümmungsradius der objektseitigen Oberfläche der dritten Linse und r6 für den Krümmungsradius der bildseitigen Oberfläche der dritten Linse steht.

7. Linsensystem nach einem der Ansprüche 1 bis 3, wobei das Linsensystem ein Sichtfeld von mehr als 100 Grad aufweist.

8. Linsensystem nach einem der Ansprüche 1 bis 3, wobei das Linsensystem eine Blendenzahl von weniger als 2,0 aufweist und eine Verzerrung von weniger als 5 % aufweist.

9. Linsensystem nach einem der Ansprüche 1 bis 3, wobei die bildseitige Oberfläche der dritten Linse eine konvexe Oberfläche oder eine konkave Oberfläche ist.

10. Optische Fingerabdruckerkennungsvorrichtung, umfassend
das Linsensystem nach einem der Ansprüche 1 bis 9.

11. Optische Fingerabdruckerkennungsvorrichtung nach Anspruch 10, wobei die optische Fingerabdruckerkennungsvorrichtung ferner umfasst:
eine Halterung, wobei das Linsensystem presspassend in der Halterung montiert ist;
einen unterhalb des Linsensystems angeordneten Bildsensor zum Empfangen eines Fingerabdruck-Lichtsignals, das durch das Linsensystem konvergiert wird, und zum Verarbeiten des Fingerabdruck-Lichtsignals, um Fingerabdruckinformationen, die in dem Fingerabdruck-Lichtsignal enthalten sind, zu erfassen; und
einen Infrarotfilter, der als eine Filterfilmschicht angeordnet ist, die auf einer Oberfläche des Bildsensors ausgebildet ist.

12. Endgerät, umfassend einen Anzeigebildschirm und die optische Fingerabdruckerkennungsvorrichtung nach Anspruch 10 oder 11, wobei die optische Fingerabdruckerkennungsvorrichtung unterhalb des Anzeigebildschirms angeordnet ist.

13. Endgerät nach Anspruch 12, wobei das Endgerät ferner
einen Schaumstoff und eine Kupferfolie umfasst, die unterhalb des Anzeigebildschirms angeordnet sind, wobei der Schaumstoff und die Kupferfolie jeweils eine Öffnung aufweisen, und wobei die Öffnung des Schaumstoffs und die Öffnung der Kupferfolie einem Oberteil des Linsensystems der optischen Fingerabdruckerkennungsvorrichtung entsprechen, sodass ein Fingerabdruck-Lichtsignal, das Fingerabdruckinformationen enthält, in das Linsensystem gelangt.

## Revendications

1. Système de lentilles (10) pour un appareil de reconnaissance optique d'empreintes digitales, qui est disposé sous un écran d'affichage pour réaliser une détection optique d'empreintes digitales sous écran d'affichage, le système de lentilles comprenant : une première lentille (11), un diaphragme, une deuxième lentille (12), et une troisième lentille (13) disposés en séquence d'un côté objet vers un côté image ; dans lequel la première lentille (11) est une lentille biconcave ayant une puissance de réfraction négative ; la deuxième lentille (12) est une lentille biconvexe ayant une puissance de réfraction positive ;
et la troisième lentille (13) est une lentille ayant une puissance de réfraction positive, une surface de côté objet de la troisième lentille (13) étant une surface convexe, et des paramètres du système de lentilles (10) satisfaisant à une première relation : -0,7 mm < f1*f3/TTL < -0,15 mm, où f1 est une distance focale de la première lentille (11), f3 est une distance focale de la troisième lentille (13), et TTL est une distance d'une surface inférieure de l'écran d'affichage (20) à une surface supérieure d'un capteur d'image (402) qui est inclus dans l'appareil de reconnaissance optique d'empreintes digitales et disposé sous le système de lentilles (10) ; les paramètres du système de lentilles (10) satisfaisant à quatrièmes relations, et les quatrièmes relations comprenant : 0,4 < CT1/CT2 < 0,6 et 1,7 < CT2/CT3 < 2,0, où CT1 est une épaisseur de la première lentille (11) selon sa direction d'axe optique, CT2 est une épaisseur de la deuxième lentille (12) selon sa direction de l'axe optique, et CT3 est une épaisseur de la troisième lentille (13) selon sa direction de l'axe optique.

2. Système de lentilles selon la revendication 1, dans lequel les paramètres du système de lentilles satisfont à au moins une relation parmi des deuxièmes relations, et les deuxièmes relations comprennent : -1,6<f1/f2<-0,6, 0,2<f2/f3<1,2, -1,7<f1/f12<-0,4, 0,5<f2/f12<1,2, 1,2<f2/f23<1,9, 1,5<f3/f23<3,7, 1,2<f12/f23<2,7, 1,5<f12/f<3,8, et 1<f23/f<1,6, où f est une distance focale du système de lentilles, f2 est une distance focale de la deuxième lentille, f12 est une distance focale combinée de la première lentille et de la deuxième lentille, et f23 est une distance focale combinée de la deuxième lentille et de la troisième lentille.

3. Système de lentilles selon la revendication 1 ou 2, dans lequel les paramètres du système de lentilles satisfont à au moins une relation parmi des troisièmes relations, et les troisièmes relations comprennent :
-1,2<r1/r2<-0,2, -2,7<r3/r4<-1,9, et -0,2<r5/r6<0,5, où r1 est un rayon de courbure d'une surface de côté objet de la première lentille, r2 est un rayon de courbure d'une surface de côté image de la première lentille, r3 est un rayon de courbure d'une surface de côté objet de la deuxième lentille, r4 est un rayon de courbure d'une surface de côté image de la deuxième lentille, r5 est un rayon de courbure de la surface de côté objet de la troisième lentille, et r6 est un rayon de courbure d'une surface de côté image de la troisième lentille.

4. Système de lentilles selon l'une quelconque des revendications 1 à 3, dans lequel la première lentille du système de lentilles satisfait à : 0,7<f1/r1<1,4 et -1,1<f1/r2<-0,3, dans lequel f1 est la distance focale de la première lentille, r1 est le rayon de courbure de la surface de côté objet de la première lentille, et r2 est le rayon de courbure de la surface de côté image de la première lentille.

5. Système de lentilles selon l'une quelconque des revendications 1 à 3, dans lequel la deuxième lentille du système de lentilles satisfait à 0,4<f2/r3<0,8 et -1,6<f2/r4<-1,2, où f2 est la distance focale de la deuxième lentille, r3 est le rayon de courbure de la surface de côté objet de la deuxième lentille, et r4 est le rayon de courbure de la surface de côté image de la deuxième lentille.

6. Système de lentilles selon l'une quelconque des revendications 1 à 3, dans lequel la troisième lentille du système de lentilles satisfait à : 1,4<f3/r5<3,0 et -0,3<f3/r6<1,3, où f3 est la distance focale de la troisième lentille, r5 est le rayon de courbure de la surface de côté objet de la troisième lentille, et r6 est le rayon de courbure de la surface de côté image de la troisième lentille.

7. Système de lentilles selon l'une quelconque des revendications 1 à 3, dans lequel le système de lentilles présente un FOV supérieur à 100 degrés.

8. Système de lentilles selon l'une quelconque des revendications 1 à 3, dans lequel le système de lentilles a un nombre F inférieur à 2,0 et présente une distorsion inférieure à 5 %.

9. Système de lentilles selon l'une quelconque des revendications 1 à 3, dans lequel la surface de côté image de la troisième lentille est une surface convexe ou une surface concave.

10. Appareil de reconnaissance optique d'empreintes digitales, comprenant :
le système de lentilles selon l'une quelconque des revendications 1 à 9.

11. Appareil de reconnaissance optique d'empreintes digitales selon la revendication 10, dans lequel l'appareil de reconnaissance optique d'empreintes digitales comprend en outre :
un support, dans lequel le système de lentilles s'ajuste par interference dans le support ;
un capteur d'image disposé sous le système de lentilles pour recevoir un signal de lumière d'empreintes digitales convergé par le système de lentilles, et traiter le signal de lumière d'empreintes digitales afin d'acquérir des informations d'empreintes digitales incluses dans le signal de lumière d'empreintes digitales ; et
un filtre infrarouge disposé comme couche de film filtrant formée sur une surface du capteur d'image.

12. Dispositif terminal, comprenant : un écran d'affichage et l'appareil de reconnaissance optique d'empreintes digitales selon la revendication 10 ou 11, dans lequel l'appareil de reconnaissance optique d'empreintes digitales est disposé sous l'écran d'affichage.

13. Dispositif terminal selon la revendication 12, dans lequel le dispositif terminal comprend en outre :
une mousse et une feuille de cuivre disposées sous l'écran d'affichage, dans lequel la mousse et la feuille de cuivre ont chacune une ouverture, l'ouverture de la mousse et l'ouverture de la feuille de cuivre correspondent à un sommet du système de lentilles de l'appareil de reconnaissance optique d'empreintes digitales, de sorte qu'un signal de lumière d'empreintes digitales incluant des informations d'empreintes digitales entre dans le système de lentilles.
